# EUROPÄISCHE PATENTSCHRIFT

(11) **EP 4 249 362 B1**
(45) Veröffentlichungstag und Bekanntmachung des Hinweises auf die Patenterteilung: **27.05.2026**
(21) Anmeldenummer: 23158918.5
(22) Anmeldetag: 28.02.2023
(51) Int. Cl.: B62M 25/08, B62M 11/16, F16H 3/66

(54) **SCHALTUNGSANORDNUNG FÜR EIN FAHRRAD**
CIRCUIT ARRANGEMENT FOR A BICYCLE
CIRCUIT POUR BICYCLETTE

(30) Priorität: 25.03.2022 DE 102022107137
(43) Veröffentlichungstag der Anmeldung: 27.09.2023
(73) Patentinhaber: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Grünecker Patent- und Rechtsanwälte PartG mbB

(56) Entgegenhaltungen:
- WO-A1-2019/192634
- DE-B3- 102022 107 915

## Beschreibung

Die Erfindung betrifft eine Schaltungsanordnung für ein Fahrrad, insbesondere ein Elektrofahrrad, und ein Fahrrad, insbesondere ein Elektrofahrrad, mit einer solchen Schaltungsanordnung.

Als Elektrofahrräder ausgebildete Fahrräder weisen einen Hilfsantrieb auf, der die Tretbewegung eines Radfahrers unterstützt. Eine Gangschaltung sorgt beim Fahrrad und Elektrofahrrad dafür, dass über einen weiten Geschwindigkeitsbereich mit etwa gleichbleibender Trittfrequenz pedaliert werden kann.

Bei der Bewältigung unterschiedlicher Aufgaben innerhalb der verschiedenen Umgebungen, in denen Fahrräder zum Einsatz kommen, ist in den meisten Fällen ein schaltbares Getriebe unabdingbar. Wo im Stadtverkehr ohne Berge noch ein Singlespeed, also ein Fahrrad mit einer nicht veränderbaren Übersetzung, ausreichen mag, stößt deren Anwendung schon bei größeren Distanzen, wie sie z. B. im ländlichen Raum überwiegen, an Grenzen.

Steile Anstiege oder Abfahrten im Mountainbike Bereich, schwere Lasten im Personen- oder Warenverkehr, ergonomische Aspekte bei Langstreckenfahrten oder immer größere maximal Geschwindigkeiten setzen eine veränderbare Übersetzung voraus, damit der Fahrer die Trittfrequenz und Pedalkraft an die jeweilige Situation anpassen kann.

Derzeit werden bei Fahrrädern und Elektrofahrrädern Nabenschaltungen, Kettenschaltungen und Tretlagerschaltungen verwendet. Im Fahrrad sind diese meist als schaltbare Zugmittelgetriebe, Planetenradgetriebe oder Stirnradgetriebe ausgeführt. Planetenradgetriebe finden meist Anwendung innerhalb des Nabengehäuses am Hinterrad, hingegen sind Stirnradgetriebe oftmals in der Nähe der Tretlagerwelle angeordnet. Zugmittelgetriebe stellen überwiegend die Verbindung der Tretlagerwelle mit der Hinterradnabe her.

In den vergangenen sechzig Jahren hat sich bei Fahrrädern das schaltbare Zugmittelgetriebe in Form eines Kettenantriebes mit einer Schaltmöglichkeit an der Hinterradachse (Kettenschaltung) stark verbreitet. Dazu wird am Rahmen, der den tragenden Bestandteil des Fahrrades mit all seinen Aufnahmepunkten für die Vorderradgabel, die Sattelstütze sowie das Hinterrad bildet, ein drehbares Tretlager mit einem oder mehreren Kettenblättern montiert. Auf der Nabe des Hinterrades befindet sich eine aus verschieden großen Ritzeln bestehende Kassette. An einem Ausfallende, das die Verbindung vom Rahmen zur Hinterachse herstellt, wird ein Schaltwerk angebracht, dessen Aufgabe es ist, die Kette auf den Ritzeln der Kassette zu führen und Schaltvorgänge zu ermöglichen. Zusätzlich kann durch einen meist am Sitzrohr angebrachten Umwerfer am Tretlager zwischen verschiedenen Kettenblättern gewechselt werden. Fahrräder mit einem Schaltungssystem wie oben beschrieben, werden im Allgemeinen als Fahrräder mit Kettenschaltung bezeichnet.

Da bei einem Rad mit Kettenschaltung konstruktionsbedingt die Komponenten außen am Rahmen montiert sind, sind sie Umwelteinflüssen besonders stark ausgesetzt. Dies führt zu einem erhöhten Verschleiß, so dass der Wirkungsgrad nach kurzer Nutzungsdauer stark abnimmt. Die dadurch bedingten kurzen Wartungsintervalle, insbesondere bei Fahrrädern mit Hilfsantrieb, werden aufgrund des dazu notwendigen Austausches der drehmomentübertragenden Bauteile der Kettenschaltung sehr kostenintensiv. Hinzu kommt, dass der Kettenumwerfer aufgrund seiner exponierten Lage am Hinterrad bei Stürzen und im rauen Gelände leicht beschädigt werden kann.

Bei so genannten "Nabenschaltungen" und bei Getrieben im Bereich des Tretlagers, im Folgenden Tretlagergetriebe genannt, sind die Bauteile innerhalb eines Gehäuses geschützt vor äußeren Einflüssen angeordnet. Nabenschaltungen weisen meist einfache oder mehrere hintereinander geschaltete Planetenradgetriebe auf, welche sich die Drehachse des Hinterrades als koaxiale Rotationsachse der einzelnen Getriebestufen teilen. Nabenschaltungen werden oft auch als Getriebenaben bezeichnet.

Nabenschaltungen sind somit schaltbare Planetengetriebe, die im Nabengehäuse des Hinterrades eingebaut sind. Sie sind von der Außenumgebung abgekapselt in einem Gehäuse angeordnet und daher weitgehend wartungsfrei. Nachteilig ist jedoch bei Nabenschaltungen das hohe Gewicht am Hinterrad, das zu einer ungünstigen Gewichtsverteilung führt. Nicht nur beim Tragen des Fahrrads über Hindernisse, sondern auch in Kurvenfahrten oder bei sportlicher Fahrt im Gelände ist das hohe Gewicht an der Hinterradnabe störend. Ein weiterer Nachteil der heute am Markt verfügbaren Nabenschaltungen ist die fehlende Schaltbarkeit unter Last. Der Fahrradfahrer, der unter Last bergauf in einem hohen Gang mit hohem Drehmoment pedaliert und einen Gang runterschalten möchte, muss bei den üblichen Nabenschaltungen zunächst Last aus der Pedale nehmen, um in einen niedrigeren Gang schalten zu können.

Das Drehmoment des Fahrers wird bei Nabenschaltungen meist über ein Zugmittelgetriebe zur Eingangswelle, dem sogenannten "Antreiber", der Getriebenabe geführt, durch die Planetenstufen gewandelt und auf das Nabengehäuse übertragen, welches folglich die Ausgangswelle des Getriebes darstellt. Die am Nabengehäuse angebrachten Speichen verbinden das Getriebe mit der Felge, die über den Reifen das Drehmoment auf die Fahrbahn überträgt.

Die Tretlagerschaltungen ergeben eine gegenüber den hecklastigen Nabenschaltungen deutlich vorteilhaftere Gewichtsverteilung. Allerdings sind Tretlagerschaltungen recht groß, so dass um das Tretlager herum kein Platz für den Elektromotor bleibt. Zudem sind die Tretlagerschaltungen von sich aus bereits so schwer, dass das zusätzliche Gewicht eines Hilfsantriebs zu einem Elektrofahrrad führen würde, das für den Alltag oder für die Weiterfahrt bei leerer Batterie zu schwer wäre. Das Schaltverhalten unter Last von Tretlagerschaltungen ist ähnlich schlecht wie bei den Nabenschaltungen. Eine sportliche Nutzung eines Fahrrades mit Tretlagerschaltung oder Nabenschaltung ist daher nur schlecht möglich.

Tretlagerschaltungen weisen meist Stirnradgetriebe auf, wie zum Beispiel aus der DE 10 2009 060 484 B4 bekannt, deren Gehäuse am Hauptrahmen des Fahrrades befestigt sind. So wird ein geschützter und kompakter Bauraum um die Tretlagerachse für das Getriebe genutzt. Die Eingangswelle eines Tretlagergetriebes ist meist direkt mit den Kurbeln und Pedalen des Fahrrades verbunden. An der Ausgangswelle überträgt ein Zugmittelgetriebe das Drehmoment zum Hinterrad. Diese Form eines Fahrradgetriebes hat den Vorteil, dass das Gewicht des Getriebes an einem zentralen und tiefen Punkt liegt, was sich positiv auf den Schwerpunkt und so auf die Fahreigenschaften auswirkt.

Bei Zahnradgetrieben werden die verschiedenen Getriebeübersetzungen, im Folgenden Gänge oder Gangstufen genannt, durch unterschiedliche Kombinationen mehrerer Zahnradpaarungen und deren jeweiligen Übersetzungen erreicht. In Stirn- und Planetenradgetrieben befinden sich meist alle Zahnräder der Eingangs- oder Zwischenwellen ständig im Eingriff mit dem dazugehörigen Zahnrad der folgenden Zwischen- oder Ausgangswelle. Folglich muss stets wenigstens ein Zahnrad einer anderen, gerade nicht aktiven Paarung sich auf seiner Welle drehen können, ohne ein Drehmoment zu übertragen. Mittels schaltbarer Kupplungen können diese freien Zahnräder einzeln mit der jeweiligen Welle oder einem folgenden Bauteil drehfest verbunden werden, um Drehmomente zu übertragen und zu schalten. Die Aktivierung einzelner Kupplungen, das Schalten, leitet so das Drehmoment durch die Zahnradpaarungen, welche in Summe die gewünschte Gesamtübersetzung eines Ganges ergeben.

Die Kupplungen werden entweder als radiale oder axiale Kupplungen, meist als formschlüssige Kupplungen ausgeführt, welche überwiegend, nach dem Prinzip eines Freilaufs, nur in eine Drehrichtung Momente übertragen. In Fig. 9 und 10 aus der WO 1998/052817 A1 ist als Beispiel die Funktion einer solchen radialen Kupplung gut zu erkennen.

Schaltbare Axialkupplungen bestehen aus je einem axial verschiebbaren und einem axial festgesetzten Bauteil, wie ebenfalls in der WO 1998/052817 A1 in den Fig. 6 und 7 dargestellt ist.

Die stirnseitige Planverzahnung einer axialen Kupplung hat gegenüber einer radialen Kupplung mit Schaltklinken den Vorteil der wesentlich größeren kraftübertragenden Fläche bei gleichem Bauraum. So wird in vorteilhafter Weise die Flächenpressung verringert.

Die Steuerung der axialen Kupplungen übernimmt, wie beispielsweise in der WO 1998/052817 A1 dargestellt, ein sogenanntes Betätigungsorgan, im Folgenden auch Schaltwelle oder Schalttrommel genannt. Dabei handelt es sich um einen zylindrischen Körper, in dem Nuten sowie Erhebungen und Vertiefungen eingeprägt sind. Die Schalttrommel ist in einer feststehenden Hohlachse, im Folgenden als Getriebehauptachse bezeichnet, drehbar gelagert angeordnet, wobei die Winkelposition der Schalttrommel in Relation zur Getriebehauptachse die Schaltzustände der einzelnen Kupplungen (aktiv, inaktiv) für die Gänge definiert. Die Winkelposition der Hohlachse kann durch den Fahrer, entweder mechanisch durch Bowdenzüge oder elektrisch über einen Aktuator, vom Lenker des Fahrrades aus gesteuert werden.

Die WO 2019/192634 A1 offenbart ein Mehrganggetriebe auf einer zentralen Achse montiert mit einer antriebsseitigen Hohlwelle und einer abtriebsseitigen Nabenhülse und mit zwei koaxial dazwischen angeordneten, mindestens zweistufigen Planetengetrieben, jeweils mit Sonnenrädern -, über zugehörige Stege miteinander verbundenen Planetenrädern - und Hohlrädern, die jeweils in einen Blockumlauf und mehrere gestufte Umsetzungsmodi schaltbar sind, wobei das erste Planetengetreibe an seinem Steg angetrieben ist und mittels dreier Kupplungen wahlweise in den Blockumlauf oder durch Achsfestlegung einzelner Sonnenräder in genannte Übersetzungsmodi schaltbar sind und das zweite Planetengetriebe durch weitere Kupplungen durch eine Achsfestlegung des Sonnenrades bei wechselseitiger Umschaltung des An- und Abtriebes zwischen dessen Hohlrad bzw. Steg in einen Umsetzungsmodus ins Langsame und einen ins Schnelle sowie in einen direkten Gang schaltbar sind. Mittels axialverschieblicher Steuerschieber sind kuppelnd federbelastete, sich radial erstreckende Kupplungsringe einer jeweiligen Gangstufe gemäß freizustellen, indem die Steuerschieber in gewendelt zirkularen Nuten einer koaxialen Schalttrommel und in radialen, parallel zur Getriebeachse orientierten Schlitzen einer sie umschließenden Hohlachse geführt, jeweils die zugehörigen Kupplungsringe schaltend betätigen.

Betrachtet man eine einzelne axiale Kupplung nach diesem Stand der Technik, so werden im eingekuppelten Zustand die beiden Hälften der stirnseitigen Planverzahnung meist mit Hilfe einer einzelnen Spiralfeder zusammengehalten. Zum Trennen einer Axialkupplung wird meist die axial verschiebliche Kupplungshälfte mit Hilfe eines Schieberings, der mit der Schalttrommel in Verbindung steht, axial gegen die Wirkung einer Feder so bewegt, dass die Verzahnung außer Eingriff bewegt und die Kupplung geöffnet wird. Unter Last werden bestimmte Funktionsflächen der beweglichen Kupplungshälfte gegen benachbarte Flächen gepresst, so dass hohe Reibungskräfte entstehen. Um unter Last von einem Gang in einen anderen Gang zu schalten, müssen diese Reibungskräfte überwunden werden. Da die Reibungskräfte in der Praxis sehr hoch sind, ist ein Schalten unter Last oder Teillast bislang nicht oder nur schwer möglich.

Es besteht also Bedarf an einer Schaltungsanordnung für eine Nabenschaltung, die so aufgebaut ist, dass ein Schaltvorgang unter Last möglich, zumindest aber erleichtert ist.

Diesen Bedarf adressiert eine Schaltungsanordnung für ein Fahrrad, insbesondere für eine Nabenschaltung, mit einer drehfest gegenüber einem Fahrradrahmen festlegbaren, hohlen Getriebehauptachse, mit einem drehbar auf der Getriebehauptachse gelagerten Antreiber, mit wenigstens einem Planetengetriebe, das wenigstens eine auf der Getriebehauptachse drehbar gelagerte Getriebekomponente in Form eines Planetenträgers oder eines Sonnenrades aufweist, mit einer Kupplung, die ein gegenüber der Getriebehauptachse zwischen einem eingekuppelten Schaltzustand und einem ausgekuppelten Schaltzustand axial verschiebliches Kupplungselement aufweist, wobei die Getriebekomponente im eingekuppelten Schaltzustand der Kupplung mit der Getriebehauptachse drehfest verbunden und im ausgekuppelten Schaltzustand der Kupplung gegenüber der Getriebeachse frei drehbar ist; mit einem in der Getriebeachse aufgenommenen, gegenüber der Getriebehauptachse drehbaren Betätigungselement, mit wenigstens einer Kulissensteuerung, die das Betätigungselement mit dem axial verschieblichen Kupplungselement verbindet und ausgestaltet ist, eine Drehbewegung des Betätigungselements in eine axiale Verschiebung des axial verschieblichen Kupplungselements umzusetzen, mit einer gehäuseförmigen Hülse, in der die Getriebehauptachse und das wenigstens eine Planetengetriebe aufgenommen sind, mit einem Aktuator zum Drehen des Betätigungselements, wobei sich der Aktuator außerhalb der Hülse befindet und einen Elektromotor aufweist, wobei die Kulissensteuerung wenigstens zwei von einer Kulissenführung der Kulissensteuerung bewegte und in Drehrichtung des Betätigungselements voneinander beabstandete Schaltfinger aufweist, die sich vom axial beweglichen Kupplungselement durch eine Öffnung der Getriebehauptachse in die Kulissenführung erstrecken, und wobei die Kupplung eine axial wirkende Feder aufweist, die auf das axial verschiebliche Kupplungselement einwirkt und das axial verschiebliche Kupplungselement zum axial feststehenden Kupplungselement der Kupplung.

Ebenso wird dieser Bedarf durch ein Fahrrad, insbesondere ein Fahrrad mit elektrischem Hilfsmotor, angesprochen, das eine solche Schaltungsanordnung aufweist.

Durch die obigen Lösungen wird ein Verkippen des axial verschieblichen Kupplungselements bei der Bewegung durch die Kulissensteuerung verhindert. Dies führt zu einer erheblichen Verringerung der Reibung während des Schaltvorgangs, so dass das Schalten unter Last erleichtert wird.

Die Kupplung weist eine in axialer Richtung wirkende Feder auf, die auf das axial verschiebliche Kupplungselement wirkt. Insbesondere kann die Wirkrichtung dieser Feder in Richtung eines Einrückens bzw. einer Schließbewegung der Kupplung gerichtet sein. Bei dieser Ausgestaltung drückt die axial wirkende Feder das axial verschiebliche Kupplungselement in axialer Richtung zum feststehenden Kupplungselement. Die Kupplung wird auf diese Weise im kraftfreien Zustand stets geschlossen und nur durch Einwirkung der Schaltfinger geöffnet. Die axial wirkende Feder kann alternativ oder zusätzlich auf die Schaltfinger des verschieblichen Kupplungselements wirken und diese in axialer Richtung vorspannen, so dass beispielsweise die wenigstens zwei Schaltfinger insbesondere im geöffneten Zustand der Kupplung stets an einer Seite einer Schaltnut anliegen, wie oben beschrieben ist.

Die obige Lösung kann durch die folgenden, voneinander unabhängigen und jeweils für sich vorteilhaften Merkmale weiter verbessert werden. Die im Folgenden beschriebenen Merkmale sind beliebig miteinander kombinierbar.

Die axial wirkende Feder kann wenigstens zwei parallel geschaltete Einzelfedern aufweisen, die bevorzugt in Umfangsrichtung voneinander beabstandet sind. Dies kann dazu führen, dass die axial wirkende Feder ihre Federkraft in Umfangsrichtung gleichmäßig aufbringt, so dass ein Verkanten vermieden wird.

So kann in einer ersten Ausgestaltung das axiale Kupplungselement fest mit den Schaltfingern verbunden sein. Insbesondere können die Schaltfinger in das axial bewegliche Kupplungselement eingeschraubt oder eingepresst sein. Die Schaltfinger sind bevorzugt stiftförmig und beispielsweise zylindrisch.

Die wenigstens zwei Schaltfinger können in eine als Kulissenführung dienende Schaltnut eintauchen. Die Kulissenführung bzw. Schaltnut kann in der Oberfläche des Betätigungselements ausgebildet sein und sich in Umfangsrichtung in sich geschlossen um das Betätigungselement erstrecken. Sie kann sich alternativ aber auch nur über einen Teil des Umfangs erstrecken. In der Kulissenführung können die wenigstens zwei Schaltfinger zwangsgeführt sein. Zusätzlich oder alternativ kann eine Axialfeder vorgesehen sein, die die wenigstens zwei Schaltfinger während eines Schaltvorgangs gegen eine Seite oder Flanke der Kulissenführung drückt. Bei einer solchen Ausgestaltung kann die Kulissenführung auf die eine Seite oder Flanke beschränkt sein, gegen die die Schaltfinger durch die Schaltfeder gedrückt sind.

Die Kupplung kann ferner ein axial feststehendes Kupplungselement aufweisen, das im eingekuppelten Schaltzustand der Kupplung mit dem axial verschieblichen Kupplungselement im Eingriff steht, wobei im ausgekuppelten Schaltzustand das axial verschiebliche und das axial stationäre Kupplungselement voneinander gelöst sind. Das axial stationäre bzw. feststehende Kupplungselement kann insbesondere in die Getriebekomponente baulich integriert bzw. von dieser gebildet sein. Das axial stationäre Kupplungselement kann drehbar gegenüber der Getriebehauptachse sein.

Das axial verschiebbare Kupplungselement kann insbesondere unmittelbar auf der Getriebehauptachse verschiebbar gelagert sein. Das axial stationäre Kupplungselement kann unmittelbar auf der Getriebehauptachse drehbar gelagert sein. Das axial verschiebliche Kupplungselement ist bevorzugt dann mit der Getriebehauptachse drehfest verbunden, wenn ein Sonnenrad mit Hilfe dieser Kupplung gegenüber dem Gestell festgesetzt werden soll. In einer weiteren Ausführung kann das axial verschiebbare Kupplungselement auf einem drehmomentübertragenden Bauteil axial verschieblich gelagert sein. Dieses drehmomentübertragende Bauteil ist beispielsweise eine Hohlwelle, durch die sich die Getriebekomponente erstreckt, oder eine Welle parallel zur Getriebehauptachse.

Um die Gefahr des Verkippens des vom Schaltfinger bewegten Kupplungselements weiter zu verringern, kann es vorgesehen sein, dass zwei der wenigstens zwei Schaltfinger sich bezüglich einer Rotationsachse des Betätigungselements diametral gegenüberliegen. Alternativ oder zusätzlich können die Längsachsen der wenigstens zwei Schaltfinger sich in einem Punkt schneiden, was ebenfalls die Gefahr des Verkippens verringert.

Bevorzugt ist die axial wirkende Feder eine Wellenfeder. Eine solche Wellenfeder kann ein Federpaket aus mehreren parallel geschalteten Blattfedern aufweisen. Zusätzlich kann die axial wirkende Feder auch aus mehreren in Reihe geschalteten Federpaketen aufgebaut sein, wobei jedes Federpaket parallel geschaltete Einzelfedern aufweisen kann.

Bevorzugt verlaufen zudem die Längsachsen von zwei Schaltfingern koaxial zueinander, wobei sie in einer senkrecht zur Rotationsachse des Betätigungselements verlaufenden Ebene liegen. Die Schaltungsanordnung weist einen Aktuator zum Drehen bzw. drehenden Antreiben des Betätigungselements auf. Der Aktuator weist einen Elektromotor auf. Anstelle eines Elektromotors kann der Aktuator jedoch nicht erfindungsgemäß auch durch beispielsweise einen Bowdenzug angetrieben sein.

Um ein Schalten unter Last zu ermöglichen, ist es weiter von Vorteil, wenn das Betätigungselement, das die Kulissensteuerung antreibt, selbst mit einer möglichst großen Antriebskraft bewegt wird. Um dies zu bewirken, kann der Aktuator ein Getriebe aufweisen, über das das Betätigungselement angetrieben ist. Das Getriebe befindet sich bevorzugt zwischen dem Elektromotor oder dem Bowdenzug auf der einen und dem Betätigungselement auf der anderen Seite.

An einem Ende des Betätigungselements kann sich ein Zahnrad befinden, das mit dem Getriebe im Eingriff steht. Das Zahnrad kann vom Betätigungselement selbst ausgeformt oder am Betätigungselement angebracht sein.

Um die Komponenten der Schaltungsanordnung vor Außeneinflüssen zu schützen, weist die Schaltungsanordnung eine gehäuseförmige Hülse auf, in der die Getriebehauptachse und das wenigstens eine Planetengetriebe aufgenommen sind. Der Aktuator befindet sich außerhalb der Hülse, was die Wartung des Aktuators vereinfacht. Das Getriebe des Aktuators befindet sich bevorzugt ebenfalls außerhalb der Hülse.

Ist die Schaltungsanordnung am Fahrradrahmen montiert, so befindet sich das Gehäuse des Aktuators bevorzugt vor und unterhalb einer Kettenstrebe. Auf diese Weise ist der Aktuator bei Stürzen geschützt. Bevorzugt ragt der Aktuator aus diesem Grund in axialer Richtung auch nicht über die Kettenstreben oder die Ausfallenden hinaus.

Gemäß einer vorteilhaften Ausgestaltung ist die Kupplung mit stirnseitigen Planverzahnungen versehen, wobei sich die Planverzahnungen im eingekuppelten Schaltzustand in wenigstens einer Richtung ein Drehmoment übertragend im Eingriff und im ausgekuppelten Schaltzustand außer Eingriff befinden. Dabei weist bevorzugt jedes Kupplungselement der Kupplung eine zum jeweils andere Kupplungselement komplementäre Planverzahnung auf. Ist ein Kupplungselement unmittelbar von einer Getriebekomponente gebildet, beispielsweise dem Planetenträger oder dem Sonnenrad, so ist die Planverzahnung direkt an dieser Getriebekomponente angebracht oder ausgeformt.

Ein Öffnungswinkel bzw. Zahnflankenwinkel der das Drehmoment übertragenden Zahnflanken der Planverzahnungen beträgt gemäß einer bevorzugten Ausgestaltung wenigstens 91 Grad und höchstens 97 Grad, gemäß einer weiter vorteilhaften Ausgestaltung zwischen 93 Grad und 96 Grad. Ein derartiger Öffnungs- oder Zahnflankenwinkel verringert die zum Schalten unter Last benötigte Kraft.

Um die zum Schalten benötigte Kraft weiter zu verringern, können zumindest die das Drehmoment übertragenden Zahnflanken eine von einem Gleitwerkstoff gebildete Oberfläche aufweisen. Beispielsweise kann die Planverzahnung aus einem Verbundwerkstoff hergestellt oder mit einem Gleitwerkstoff beschichtet sein. So können wenigstens die das Drehmoment übertragenden Zahnflanken, bevorzugt die gesamte Planverzahnung, mit einem Gleitlack beschichtet sein.

Das axial verschiebliche Kupplungselement kann über eine Zahnwellenverbindung oder Steckverbindung axial verschieblich, aber drehfest mit der Getriebehauptachse oder einem drehmomentübertragenden Bauteil der Schaltungsanordnung verbunden bzw. auf dieser angeordnet sein. Ein Schrägungswinkel der Steckverzahnung oder des Zahnwellenprofils beträgt bevorzugt wenigstens etwa 1 Grad und höchstens etwa 7 Grad, weiter bevorzugt wenigstens etwa 3 Grad und höchstens etwa 5 Grad. Der Schrägungswinkel gibt an, um wieviel Grad die Steckverzahnung oder Zahnwellenverbindung gegenüber der Rotationsachse bzw. einer durch die Rotationsachse gehenden Ebene geneigt bzw. verdrillt ist. Mit einem solchen Schrägungswinkel lässt sich ebenfalls die zum Schalten unter Last benötigte Kraft verringern.

Gemäß einer weiteren vorteilhaften Ausgestaltung bildet die Kupplung im eingekuppelten Zustand einen Freilauf, der nur in einer Richtung ein Drehmoment übertragen kann. Dies erleichtert die Konstruktion des Getriebes und erlaubt auch den Freilauf des Rades bei eingelegtem Gang und sorgt dafür, dass es innerhalb eines Schaltvorgangs von einem Gang in einen anderen Gang nicht zu einem Klemmen durch Überbestimmung der Schaltanordnung kommt.

Gemäß einer weiteren vorteilhaften Ausgestaltung ist das Betätigungselement bevorzugt unmittelbar an der Getriebehauptachse axial festgelegt. Mit anderen Worten ist die Getriebehauptachse bevorzugt unmittelbar am Betätigungselement axial gesichert. Die unmittelbare Festlegung an der Getriebehauptachse und nicht beispielsweise an den Ausfallenden oder an einem Gehäuse ermöglicht es, die Toleranzabweichungen der Schaltungsanordnung klein zu halten.

Das Betätigungselement kann beispielsweise eine Führungsnut aufweisen, in die wenigstens ein an der Getriebehauptachse befestigter Führungsfinger ragt, wobei das Betätigungselement durch den Führungsfinger und die Führungsnut in axialer Richtung fixiert ist. Dabei verläuft die Führungsnut stets auf der axial gleichen Höhe. Die Führungsnut bzw. eine ihrer Seiten kann dabei als axiale Referenzlage dienen.

Der wenigstens eine Führungsfinger ist bevorzugt zylindrisch. Er kann mittelbar oder unmittelbar in die Getriebehauptachse eingeschraubt oder eingepresst sein.

Der wenigstens eine Führungsfinger kann in der Führungsnut zwangsgeführt sein.

Die Schaltungsanordnung weist gemäß einer Ausgestaltung eine Kupplung am Planetenträger und eine Kupplung am Sonnenrad auf.

Um die Anzahl der Gänge zu erhöhen, kann wenigstens ein weiteres Planetengetriebe vorgesehen sein, bei dem wenigstens eine weitere Kupplung jeweils an dessen Planetenträger und/oder an dessen Sonnenrad vorhanden ist. Kupplungen können am Planetenträger, Sonnenrad und/oder Hohlrad des wenigstens einen weiteren Planetengetriebes angeordnet sein. Die Planeten auf dem Planetenträger können mit einem oder mehreren Hohlrädern oder Sonnenrädern in Verbindung stehen.

Die Schaltungsanordnung kann in einer weiteren vorteilhaften Ausgestaltung eine elektronische Steuereinheit aufweisen, die ausgestaltet ist, den Elektromotor des Aktuators abhängig von einem elektrischen Schaltbefehl zu betätigen. Der elektrische Schaltbefehl kann von einem an einem Lenker anbringbaren Schalter erzeugt werden und über Funk oder drahtgebunden an die Steuereinheit übermittelt werden.

Die elektronische Steuereinheit kann auch ausgestaltet sein, ein für eine Winkellage einer Pedalkurbel des Fahrrads repräsentatives Pedallagesignal zu empfangen und den Aktuator abhängig vom Pedallagesignal zu betätigen.

Beispielsweise kann die elektronische Steuereinheit ausgestaltet sein, einen Schaltvorgang durchzuführen, wenn das Pedallagesignal eine Winkellage einer Pedalkurbel an oder bei einem oberen oder unteren Totpunkt repräsentiert. Üblicherweise ist die von einem Fahrradfahrer aufgebrachte Kraft am oberen und unteren Totpunkt geringer, so dass bei diesen Winkellagen der Pedalkurbel die Last in der Schaltungsanordnung geringer ist.

Die elektronische Steuereinheit kann ferner ausgebildet sein, bei Durchführung eines Schaltvorganges ein insbesondere elektrisches Schaltsignal an eine Motorsteuerung des Fahrrads auszugeben. Die Motorsteuerung kann ausgestaltet sein, die Leistung des Hilfsmotors abhängig vom Schaltsignal bzw. von einem Schaltvorgang der Schaltungsanordnung zu steuern. Beispielsweise kann die Motorsteuerung die Leistung des Hilfsmotors über eine vorbestimmte Zeit verringern, wenn ein Schaltvorgang durchgeführt wird bzw. ein Schaltsignal empfangen wird. Damit wird die Last in der Schaltungsanordnung verringert, was die zum Schalten benötigte Kraft ebenfalls verringert.

Mit Hilfe von Zeichnungen sollen Ausführungsbeispiele der Erfindung nachfolgend näher erläutert werden.

Es zeigen:
- Fig. 1:: Eine schematische Darstellung eines Teils eines Fahrradrahmens mit einer Nabenschaltung in einer Ansicht von schräg hinten links;
- Fig. 2:: eine schematische Schnittdarstellung einer Nabenschaltung mit zwei Gängen in geschnittener Darstellung;
- Fig. 3:: eine schematische Schnittdarstellung der Nabenschaltung der Fig. 2;
- Fig. 4:: eine schematische Schnittdarstellung einzelner Bauteile der Nabenschaltung der Fig. 3;
- Fig. 5:: eine schematische, perspektivische Explosionsdarstellung der Bauteile der Fig. 4;
- Fig. 6:: eine schematische Draufsicht auf den Aufbau der Fig. 4 und 5;
- Fig. 7:: eine vereinfachte Darstellung der Geometrie des Zahnkontaktwinkels α (alpha) der Zahnscheiben;
- Fig. 8:: eine schematische Draufsicht auf eine Kupplung im geschlossenen Zustand;
- Fig. 9:: eine schematische, perspektivische Explosionsdarstellung der Bauteile der Fig. 8;
- Fig. 10:: eine schematische Draufsicht auf eine weitere Ausgestaltung der Kupplung im geöffneten Zustand; und
- Fig. 11:: eine schematische, perspektivische Explosionsdarstellung der Bauteile der Fig. 10.

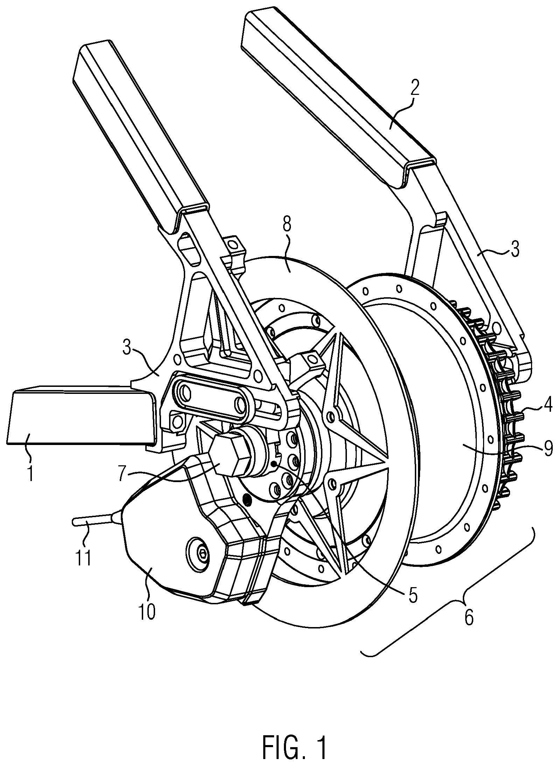

Fig. 1 zeigt die Kettenstreben 1 und die Sitzstreben 2 eines Fahrradrahmens. Um die Darstellung nicht zu überladen, sind in der Figur keine Schrauben und Speichen dargestellt. Beide Bauteile sind mit den Ausfallenden 3 verbunden, beispielsweise verschweißt. Die mechanische Tretleistung des Fahrers wird über einen nicht dargestellten Riementrieb auf die hintere Riemenscheibe 4 übertragen. Wird ein Kettentrieb verwendet, so kommt anstelle der Riemenscheibe ein Kettenritzel zum Einsatz.

Um den Riementrieb zu spannen, können rechts und links an den Ausfallenden 3 verschiebliche Achsaufnahmen 5 angeschraubt sein. Die Schaltungsanordnung 6, hier eine Nabenschaltung, wird bevorzugt mit Hilfe einer Steckachse 7 mit den Achsaufnahmen 5 verschraubt. An beispielsweise der linken Achsaufnahme 5 befinden sich die Aufnahmepunkte für die Scheibenbremszange, die hier nicht dargestellt ist. Eine Bremsscheibe 8 ist mit dem Nabengehäuse 9, im Folgenden auch Hülse 9 genannt, drehfest verbunden, beispielsweise verschraubt. Die Speichenlöcher sind am Nabengehäuse 9 gut sichtbar.

Die unterschiedlichen Gangstufen innerhalb der Nabenschaltung 6 können mit Hilfe eines Aktuators 10, der sich vorzugsweise zu großen Teilen oder insgesamt vor und unterhalb der Steckachse 7 befindet, eingelegt werden. Der Aktuator kann mechanisch, elektrisch oder elektronisch über eine Schaltleitung 11 betätigt werden. Auch eine Funkübertragung ist möglich.

Das Bedienelement zur Steuerung des Getriebes befindet sich üblicherweise am Lenker des Fahrrades und ist hier nicht gezeigt. Das Bedienelement erzeugt den Schaltbefehl und kann als mechanischer Drehgriff, Schalter oder Drucktaster, elektrisch, mit Bowdenzügen oder hydraulisch, ausgeführt sein. Die Schaltleitung 11 überträgt den Schaltbefehl vom Lenker zum Getriebe. Ebenso kann die Übertragung elektrisch mittels Leitungen oder per Funk erfolgen.

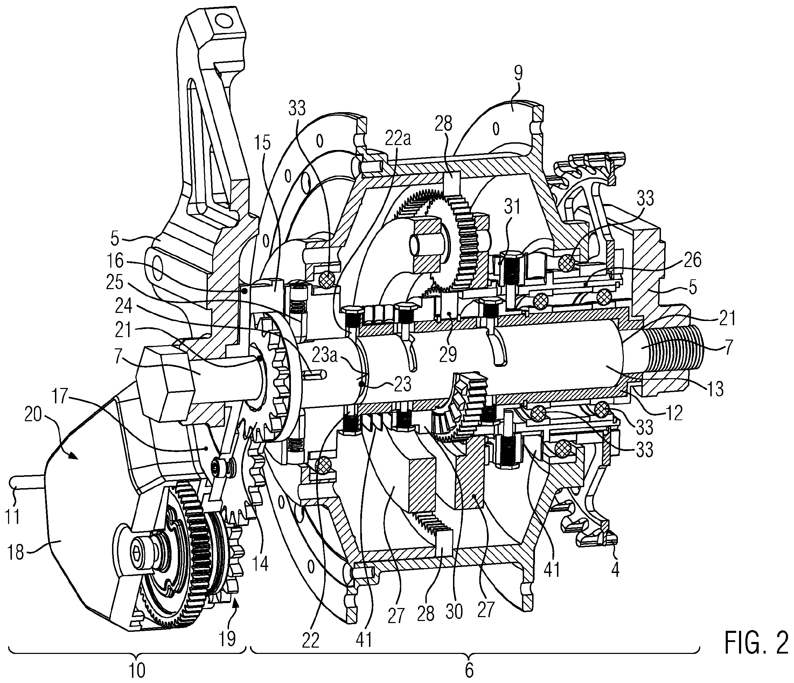

Fig. 2 zeigt eine Nabenschaltung, wie sie in der Anordnung der Fig. 1 verwendet werden kann, in beispielhafter Ausführung mit zwei Gängen in geschnittener Darstellung.

Es wurde eine Ausführung mit nur zwei Gängen gewählt, um die Grundsätze der verbesserten Schaltungsanordnung exemplarisch darzustellen. Die dargestellte Schaltungsanordnung ist auch dafür geeignet, das Schaltverhalten von Nabenschaltungen mit mehr Gängen, wie gemäß DE 197 20 794 B4 oder DE 11 2019 001 604 B4 zu verbessern.

Eine Getriebehauptachse 12 ist über die Achsaufnahmen 5 fest mit dem Fahrradrahmen verbunden. Innerhalb der Getriebehauptachse rotiert eine Schalttrommel 13, im Folgenden auch als Betätigungselement 13 bezeichnet. Die Schalttrommel 13 ist bevorzugt an einem ihrer axialen Enden mit einem Betätigungszahnrad 14 verbunden oder ausgeformt. Das Betätigungszahnrad 14 kann sich einem Teilbereich der Getriebehauptachse 12 befinden, der im Folgenden als Schaltgehäuse 15 bezeichnet ist. Das Schaltgehäuse 15 ist beispielsweise mit einer Achsplatte 16 auf der linken Seite verbunden. Sämtliche Reaktionsmomente werden von der Getriebehauptachse 12 über das Schaltgehäuse 15 an die Achsplatte 16 abgegeben und weiter in die Achsaufnahmen 5 eingeleitet.

Innerhalb eines Aktuatorgehäuses 17 befindet sich ein Getriebe 19, das eine Drehbewegung innerhalb des Aktuatorgehäuses 17 an die Schalttrommel 13 weiterleitet. Das Aktuatorgehäuse 17 kann einen abnehmbaren Deckel 18 aufweisen. In der beispielhaft dargestellten Ausführung der Fig. 2 befindet sich innerhalb des Aktuatorgehäuses 17 ein elektrischer Motor 20, der bevorzugt über das Getriebe 19 eine Rotation der Schalttrommel 13 bewirkt. Der elektrische Motor 20 ist in dieser Darstellung nicht sichtbar, da er durch den Deckel 18 des Aktuatorgehäuses 17 verdeckt ist. Das Aktuatorgehäuse 17 geht in der dargestellten Ausgestaltung in das Schaltgehäuse 15 über.

Mit einem elektrischen Motor 20 und einer geeigneten Übersetzung des Getriebes 19 lassen sich hohe Schaltkräfte und Drehmomente an der Schalttrommel 13 erreichen. In herkömmlichen Konstruktionen ist die Schalttrommel 13 üblicherweise axial an beiden Enden über ihre Planflächen 21 gegen axiales Verschieben gesichert. Wird bei dieser Ausgestaltung die Steckachse 7 innerhalb von Konstruktionen nach dem Stand der Technik stark angezogen, so kann die Schalttrommel verklemmen. Bei der dargestellten Ausführungsform dagegen ist die Getriebehauptachse 12 drehfest zwischen den zwei Ausfallenden 3 mit Hilfe der Steckachse 7 und der Steckachsmutter 34 eingespannt. Ein axiales Einspannen der Getriebehauptachse 12 bei angezogener Steckachse 7 führt nicht zu einem Verklemmen der Schalttrommel 13, da die Schalttrommel 13 an ihren Planflächen 21 von der Getriebehauptachse 12 und der Achsplatte 16 beabstandet ist. Die Schalttrommel 13 kann innerhalb der Getriebehauptachse 12, angetrieben vom Aktor bzw. elektrischen Motor, rotieren.

Die Schaltungsanordnung besitzt somit eine drehfest am Fahrradrahmen montierbare Getriebehauptachse 12 mit einem drehbar auf der Getriebehauptachse gelagerten Antreiber 26 und einer drehbar auf der Achse gelagerte Hülse 9. Die Getriebehauptachse 12 ist hohl ausgeführt und innerhalb des Hohlkörpers befindet sich ein Betätigungselement 13, welches relativ zur Getriebehauptachse 12 unterschiedliche Winkelpositionen einnehmen kann.

Bei der beispielhaften Ausgestaltung der Fig. 2 befindet sich auf der Ober- bzw. Mantelfläche der Schalttrommel 13 mindestens eine Führungsnut 23, in die mindestens ein beispielsweise zylindrischer Führungsfinger 22a eintaucht. Die Führungsnut 23 besitzt axiale Seitenflächen 23a, entlang denen während der Rotation der Schalttrommel 13 der Führungsfinger 22a gleitet. Der Abstand der axialen Seitenflächen der Führungsnut 23 von einem axialen Fixpunkt ist im Vergleich zu allen anderen Nuten, die ebenfalls auf der Schalttrommel angeordnet sind, in jeder Gangstufe zumindest nahezu gleich. In der einfachsten Bauart ist die Führungsnut 23 eine ringförmige, insbesondere kreisringförmige Einfräsung oder Eindrehung auf der Mantelfläche der Schalttrommel 13. Der wenigstens eine Führungsfinger 22a und die Führungsnut 23 fixieren die Getriebehauptachse 12 und das Betätigungselement 13 in axialer Richtung relativ zueinander. Somit ist die Schalttrommel 13 bei ihrer Rotation relativ zur und innerhalb der Getriebehauptachse 12 durch den Führungsfinger 22a und die Führungsnut 23 präzise geführt.

In einer bevorzugten Ausführung ist ein Rastmechanismus vorgesehen, durch den die Schalttrommel 13 bei ihrer Drehung in voneinander beabstandeten Rastpunkten einrastet. Beispielsweise kann die Schalttrommel 13 an ihrer Umfangsfläche mit einer oder mehreren in Umfangsrichtung beabstandeten Vertiefungen 24 versehen sein, die die Winkellagen der Rastpunkte definieren. Ein federbelastetes Druckstück 25 kann mit seinem kugelförmigen Ende in die Vertiefungen 24 einschnappen und eine freie Rotation der Schalttrommel 13 innerhalb der Getriebehauptachse 12 hemmen. Eine Vertiefung als Rastpunkt 24 befindet sich bevorzugt genau an einer jeweiligen Winkelposition der Schalttrommel 13, an der ein bestimmter Gang eingelegt ist. Auf diese Weise kann das Spiel innerhalb des Aktuators 10 eliminiert werden. Außerdem ist es durch den Rastmechanismus möglich, den elektrischen Motor 20 innerhalb des Aktuators 10 in den jeweiligen Gangstufen stromlos zu halten.

Koaxial zum Nabengehäuse 9 ist ein Antreiber 26 sowie mindestens ein Planetenträger 27, mindestens ein Hohlrad 28 und mindestens ein Sonnenrad 29 eines Planetengetriebes 29a angeordnet. In einer beispielhaften Ausgestaltung bildet das Hohlrad 28 den Abtrieb zum Nabengehäuse 9. Über die Riemenscheibe 4, die auf dem Antreiber 26 montiert bzw. mit diesem drehbar verbunden ist, werden die Drehmomente in die Nabenschaltung 6 eingespeist. Der Antreiber 26 ist bevorzugt als Hohlwelle ausgestaltet und beispielsweise über zwei Kugellager 33 auf der Getriebehauptachse 12 gelagert. Das Nabengehäuse 9 kann auf der Getriebehauptachse 12 und auf dem Antreiber 26 über Kugellager 33 gelagert sein.

Werden mehr als zwei Gänge benötigt, so werden einfach mehr Planetengetriebe verwendet, wie dies in der DE 197 20 794 B4 oder der DE 11 2019 001 604 B1 beschrieben ist.

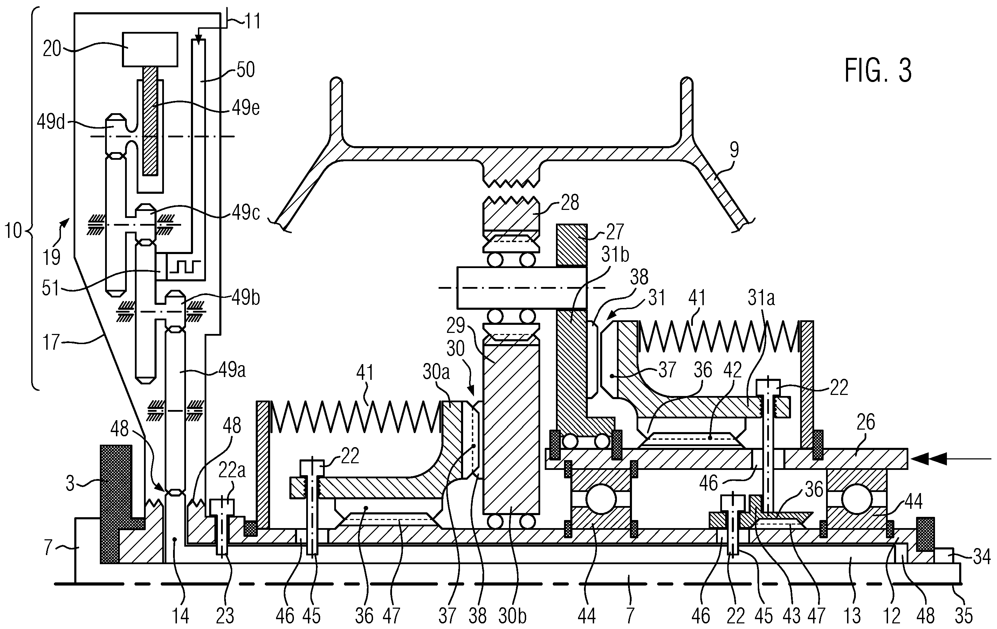

Fig. 3. zeigt das einfache 2-Gang Planetengetriebe der Fig. 2 in einer schematischen Schnittdarstellung.

Eine Kupplung 30 ist ausgestaltet, das Sonnenrad 29 in mindestens einem Schaltzustand mittelbar oder unmittelbar drehfest mit der Getriebehauptachse 12 zu verbinden bzw. in mindestens einem anderen Schaltzustand eine drehfeste Verbindung von Sonnenrad 29 und Getriebehauptachse 12 zu lösen. Die Kupplung 30 weist ein axial in Richtung der Rotationsachse 35 verschiebliches Kupplungselement 30a und ein axial festes Kupplungselement 30b auf, das hier vom Sonnenrad 20 selbst gebildet ist. Beide Kupplungselemente 30a, 30b besitzen bevorzugt eine radial nach innen vorspringende Innenverzahnung 36 und zueinander komplementäre Planverzahnungen 37, 38. Über die Innenverzahnung 36 ist das axial verschiebliche Kupplungselement 31a mit der Getriebehauptachse 12 drehfest verbunden, die eine zur jeweiligen Innenverzahnung komplementäre Außenverzahnung aufweisen kann.

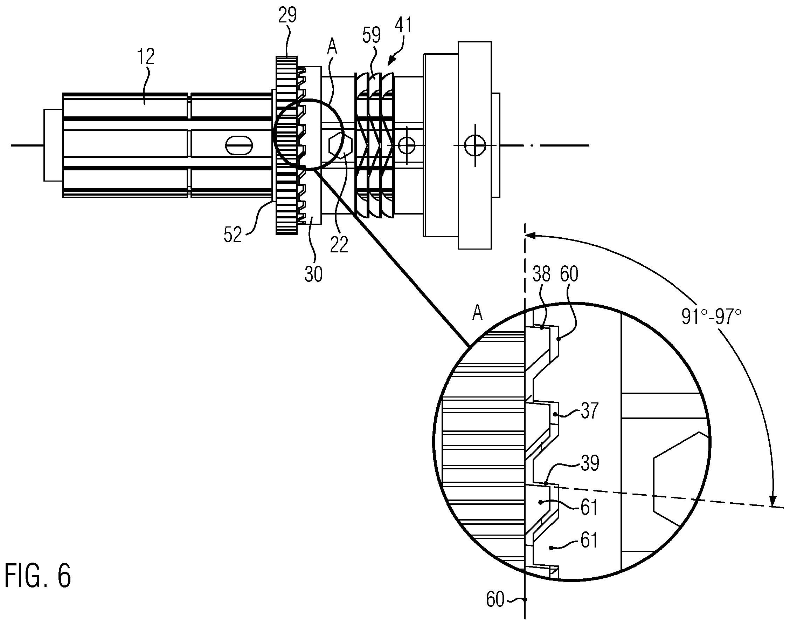

Die zwei stirnseitigen Planverzahnungen 37 und 38 besitzen Zahnflanken bzw. Druckflächen 39 (Fig. 6), die sich in Abhängigkeit von der Winkelposition des Betätigungselementes 13, also dem Schaltzustand oder der Schaltstellung, entweder berühren oder nicht berühren. Bei Übertragung eines Drehmoments berühren sich die Zahnflanken 39. Die Planverzahnungen 37, 38 sind koaxial zueinander angeordnet. Ihr axialer Abstand ist abhängig von der Winkelposition bzw. Schaltstellung des Betätigungselementes 13.

Zusätzlich oder alternativ kann der Planetenträger 27 in mindestens einem Schaltzustand mittelbar oder unmittelbar mit Hilfe einer weiteren schaltbaren Kupplung 31 drehfest mit dem Antreiber 26 verbunden sein. Wie die Kupplung 30 ist auch die schaltbare Kupplung 31 mit einem axial beweglichen Kupplungselement 31a und einem axial feststehenden Kupplungselement 31b versehen. Das axial feststehende Kupplungselement 31b kann direkt vom Planetenträger 27 gebildet sein. Hierzu kann am Planetenträger 27 eine stirnseitige Planverzahnung 40 vorgesehen sein, die formschlüssig mit der stirnseitigen Planverzahnung 37 des axial beweglichen Kupplungselements 31a in Eingriff bringbar ist. Bevorzugt wird die stirnseitige Planverzahnung 37 des verschieblichen Kupplungselements 31 von einer axial wirkenden Feder 41 selbsttätig in die stirnseitige Planverzahnung 40 am Planetenträger 27 eingekuppelt.

Das Antriebsmoment wird von der Außenverzahnung 42 des Antreibers 26 auf die Innenverzahnung 36 des Kupplungselements 31a übertragen. Die axiale Position des Kupplungselements 31a kann über wenigstens zwei Schaltfinger 22 verändert werden, von denen nur einer dargestellt ist. Die Schaltfinger 22 können über eine Mantelfläche, ein Außengewinde und einen Kopf verfügen und mit dem Kupplungselement 31a fest verbunden, beispielsweise eingeschraubt sein. Die Schaltfinger 22 der Kupplung 31 stehen über den Schiebering 43 nur in mittelbarer Verbindung zum Betätigungselement 13. Die Schaltfinger 22 zum Auskuppeln des Planetenträgers sind gegenüber dem Betätigungselement 13 und dem Schiebering 43 drehbar. Der Schiebering 43 überträgt die axiale Schaltbewegung vom Betätigungselement 13 auf die Schaltfinger 22. Die drehbare Verbindung zwischen den Schaltfingern 22 und dem Schaltring 43 bzw. dem Betätigungselement 13 ist notwendig, da der Antreiber 24, über Kugellager 44 auf der Achse 12 gelagert, rotiert und die Schaltinformation bzw. -bewegung somit von einem stehenden Element auf ein rotierendes Element übertragen werden muss.

Die stirnseitige Planverzahnung 40 am Planetenträger 27 ist in Fig. 3 im geöffneten bzw. ausgekuppelten Schaltzustand dargestellt. Im geöffneten Schaltzustand steht der zylindrische Schaltfinger 22 der Kupplung 31 ständig in gleitender Verbindung zum Schiebering 43. Der Schiebering 43 hält die Kupplung 31 gegen die axial in Schließrichtung wirkende Feder 41 im geöffneten Schaltzustand. Die Feder 41 ist in diesem Schaltzustand nicht in der Lage, die Kupplung 31 zu schließen.

Am Schiebering 43 können wenigstens zwei weitere Schaltfinger 22 befestigt, beispielsweise eingeschraubt sein. Die Schaltfinger 22 bewegen sich wiederum während eines Schaltvorgangs in einer Öffnung 46 der Getriebehauptachse 12 und tauchen in die Schaltnut 45 ein, entlang der sie gleiten. Auch hier ist nur ein Schaltfinger 22 dargestellt.

In der beispielhaften Ausgestaltung der Fig. 2 weist das Betätigungselement 13 zwei Schaltnuten 45 auf, die zusammen mit den in sie hinein ragenden Schaltfingern 22 jeweils eine Kulissenführung 45a für das axial bewegliche Kupplungselement 30a, 31a bilden. Die Kulissenführung 45a sorgt für eine axiale Bewegung der Schaltfinger 22, wenn das Betätigungselement 13 bei einem Schaltvorgang um seine Rotationsachse 35 rotiert. Die in die Schaltnuten 45 ragenden Schaltfinger 22 bilden die Kulissensteine in der Kulissenführung. Die Getriebehauptachse 12 ist in der Nähe, insbesondere radial gegenüberliegend, der Schaltnuten 45 durch die Öffnungen 46 durchbrochen. Die in die Schaltnuten 45 ragenden Schaltfinger 22 reichen durch die Getriebehauptachse 12. Um den zylindrischen Schaltfingern 22 eine axiale Bewegung zu ermöglichen, während sie während des Schaltvorgangs mit ihrer Mantelfläche innerhalb einer Schaltnut 45 des Betätigungselementes 13 gleiten, sind die Öffnungen 46 bevorzugt Langlöcher.

Die Schaltfinger 22 können in der jeweiligen Schaltnut 45 zwangsgeführt sein. Beispielsweise werden die Schaltfinger 22 durch beide Seiten der Schaltnut 45 bewegt. Alternativ oder zusätzlich können die in eine Schaltnut 45 eintauchenden Schaltfinger 22 durch eine Axialfeder, beispielsweise die Feder 41, permanent oder nur während eines Schaltvorgangs gegen nur eine Seite oder Flanke der Schaltnuten 45 gedrückt sein. In diesem Fall wirkt nur diese eine Seite oder Flanke als Kulissenführung.

Die Getriebehauptachse 12 kann an wenigstens einer Stelle eine Außenverzahnung 47 aufweisen, die mit einer oder mehreren Innenverzahnungen 36 von Kupplungselementen 31a oder einem Schiebering 43 mit Innenverzahnung 43 in axial verschiebbarer, aber drehfester Verbindung steht. Der Schiebering 43 kann als Teil des axial verschieblichen Kupplungselements 31a betrachtet werden. Diese Außenverzahnung 47 kann zum einen die Reaktionsmomente des Sonnenrades 29 an die Ausfallenden 3 weiterleiten und zum anderen dafür Sorge tragen, das keine Scherkräfte auf die in den Schiebering 43 eingeschraubten zylindrischen Schaltfinger 22 einwirken können.

Damit die Schaltnuten 45 präzise die axiale Position der Schaltfinger 22 festlegen können, sollte das Betätigungselement 13 in Relation zur Getriebehauptachse 12 kein merkliches axiales Spiel aufweisen. Dies wird, wie oben beschrieben, durch die Führungsnut 23 und den Führungsfinger 22a erreicht.

In vorteilhafter Ausgestaltung besitzen die sich axial gegenüberliegenden Flächen der Nuten 23, 45 einen Abstand, der gleich oder nur leicht größer ist als der Durchmesser der jeweils in die Nut 23, 45 eintauchenden zylindrischen Finger 22, 23.

Eine als Kulissenführung dienende Schaltnut 45 unterscheidet sich von der Führungsnut 23 dadurch, dass die Schaltnut 45 einen sich in Umfangsrichtung der Getriebehauptachse 12 ändernden axialen Abstand zur Führungsnut 23 aufweist oder dass es nur eine axiale Seitenfläche gibt, die eine gleitende Verbindung mit einem zylindrischen Schaltfinger 22 einnehmen kann.

Ein Verkippen eines axial verschieblichen Kupplungselements 30a, 31a kann während der axialen Schaltbewegung besonders gut verhindert werden, wenn die Kupplungen 30, 31 bzw. der Schiebering 43 jeweils zwei in Umfangsrichtung voneinander beabstandete Schaltfinger 22 aufweist, die in die jeweilige Schaltnut 45 eintauchen. Ebenso können zwei oder mehr in Umfangsrichtung voneinander beabstandete Führungsfinger 22s in die Führungsnut 23 eintauchen. Zusätzlich ist es vorteilhaft, wenn sich die Zylinderachsen der wenigstens zwei zylindrischen Schaltfinger 22, 22a in mindestens einem Punkt schneiden.

Noch besser und platzsparender ist es, wenn wenigstens zwei der Schaltfinger 22, 22a einer Nut 23, 45 koaxial und rechtwinklig zur Rotationsachse 35 des Betätigungselementes 13 liegende Zylinderachsen aufweisen.

Die Schaltfunktion wird bei der dargestellten Ausführungsform dadurch erreicht, dass das Betätigungselement 13 mit einem elektrisch betriebenen Aktuator 10 in Verbindung steht, wobei sich der Aktuator 10 außerhalb der Hülse 9 befindet. Bei einer Betätigung des Aktuators 10 ändert sich die Winkelposition des Betätigungselementes 13 gegenüber der Achse 12, so dass die Schaltfinger 22 in den Schaltnuten 45 durch aufgrund deren drehwinkelabhängigen Axialposition axial verschoben werden. Die radiale Position der beweglichen Kupplungen 30, 31 und ihrer Kupplungselemente bleibt dabei unverändert.

Bei einem solchen Schaltvorgang muss die stirnseitige Planverzahnung 38 der Kupplung 30 axial außer Eingriff bewegt, insbesondere gezogen werden. Findet der Schaltvorgang unter Last statt, muss unter Umständen ein hohes Drehmoment an der Schalttrommel 13 aufgebracht werden, denn es muss kurzzeitig die hohe Haftreibung an der stirnseitige Planverzahnung 38 und der Innenverzahnung 36 überwunden werden. Bei dem dargestellten Ausführungsbeispiel kann über das Getriebe 19 ein Elektromotor 20 oder gegebenenfalls auch ein Bowdenzug ein hohes Drehmoment an der Schalttrommel 13 aufbringen.

Der Elektromotor 20 kann sehr klein und leicht gebaut sein, wenn er mit hoher Drehzahl betrieben wird und das Getriebe 19 über mehrere insbesondere untersetzende Getriebestufen 49a bis 49e, die sich bevorzugt allesamt innerhalb des Aktuatorgehäuses 17 befinden, mit der Schalttrommel 13 verbunden ist. Die Getriebestufen sind in Fig. 3 beispielhaft als Stirnradgetriebe 49a, 49b, 49c, 49d und als Schneckenradgetriebe 49e dargestellt. Andere Übertragungsarten und Anzahlen von Getriebestufen sind möglich.

Wenn sich der Aktuator 10 im eingebauten Zustand am Fahrrad zu großen Teilen vor und unterhalb der Radachse 35 befindet und auch in axialer Richtung gegenüber den Ausfallenden etwas nach innen versetzt ist bzw. nicht zu weit herausragt, ist er gut vor Beschädigungen geschützt. Das Nabengehäuse 9 kann klein ausgestaltet werden, wenn sich das Zahnrad 14 und das Getriebe 19 innerhalb des Aktuatorgehäuses 17 jedoch außerhalb des Nabengehäuses 9 befinden. Wenn mindestens drei Zahnräder der Getriebestufen 49a bis 49e koaxial zur Rotationsachse 35 des Betätigungselementes 13 angeordnet sind, kann eine Kollision oder Überschneidung mit der üblicherweise verwendeten Bauform der Ausfallenden 3 verhindert werden.

Zusätzlich ist es vorteilhaft, wenn sich innerhalb des Aktuatorgehäuses 17 eine elektronische Steuereinheit 50 befindet, die zur Regelung des Elektromotors 29 und zur Verarbeitung von Signalen einer Sensorik 51 dient. In dem Aktuatorgehäuse 17 können sich ein oder mehrere Sensoren 51 befinden, die die Lage oder Orientierung der Schalttrommel bzw. deren Schaltposition ermitteln und an die Steuereinheit 50 weitergeben. Die Steuereinheit 50 ist bevorzugt ausgestaltet, mit anderen Steuerelementen, die sich am Fahrrad befinden, drahtlos oder drahtgebunden zu kommunizieren. Auf diese Weise kann zum Beispiel das Drehmoment des Hilfsmotors eines Elektrofahrrades zumindest kurzzeitig reduziert werden, wenn ein Schaltvorgang durchgeführt werden soll, um die Haftreibung an den Verzahnungen 36, 37, 38, 42, 47 zu verringern. Auch kann beispielsweise die Steuereinheit 50 ausgestaltet sein, einen Schaltvorgang in Abhängigkeit von der Kurbelstellung des Fahrrads durchzuführen. Hierzu kann die Steuereinheit 50 ausgestaltet sein, über die Leitung 11 ein Schaltsignal auszugeben, das repräsentativ für einen gerade durchzuführenden Schaltvorgang ist. Beispielsweise ist die Steuereinheit so ausgestaltet, den Elektromotor 20 zu betätigen, wenn sich ein Pedal im unteren Totpunkt befindet.

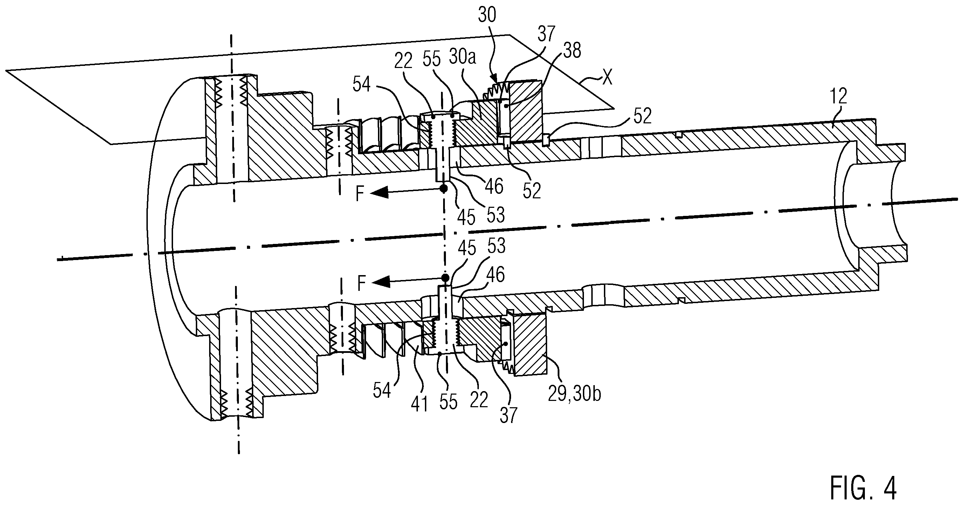

Fig. 4 zeigt die Getriebehauptachse 12, eine axial wirkende Feder 41, die Kupplung 30 mit Plan- und Innenverzahnung, das Sonnenrad 29, zwei Federringe 52 und zwei sich diametral gegenüberliegende Schaltfinger 22 im Schnitt. In dieser Darstellung wird deutlich, dass in einer vorteilhaften Ausgestaltung mindestens zwei Schaltfinger 22 vorgesehen sind, die über jeweils eine Mantelfläche 53, ein Außengewinde 54 und über einen Kopf 55 verfügen können und in ein Kupplungsbauteil 30 eingeschraubt sein können. Die Mantelflächen 53 stellen die Verbindung zum Betätigungselement 13 her. Der Vorteil der eingeschraubten oder einschraubbaren Schaltfinger 22 besteht darin, dass bei dieser Ausgestaltung die Schaltfinger 22 in der Produktion automatisiert montiert werden können und eine völlige Spielfreiheit zwischen dem Schaltfinger 22 und dem axial verschieblichen Kupplungselement 30a erreicht wird. Zudem lässt sich bei einer solchen Anordnung die Schaltanordnung 6 leichter demontieren. Das Außengewinde 54 ist vorzugsweise zwischen der zylindrischen Mantelfläche 53 und dem Kopf 55 angeordnet. Der Kopf 55 ist vorzugsweise mit einem Innen- oder Außensechskant oder einer Torx-Verbindung versehen.

Aufgrund der symmetrischen Einleitung der Kraft F über die zwei sich diametral gegenüberliegenden Schaltfinger 22 wird ein Verkanten verhindert und das Schalten unter Last vereinfacht. Die Wirkrichtung der Feder 41 entspricht der Richtung, in der die Kupplung 30 eingekuppelt wird.

Beim Auskuppeln unter Last muss das axial bewegliche Kupplungsbauteil 30a mit seiner Innenverzahnung 36 (Fig. 3) und seiner stirnseitigen Planverzahnung 37 aus der Haftreibung heraus gegen die Kraft der Feder 41 gezogen werden. Sobald die axiale Schaltbewegung begonnen hat, geht die Haftreibung in eine geringere Gleitreibung über. Nachdem eine bestimmte Strecke der axialen Schaltbewegung durchlaufen ist, sind die stirnseitigen Planverzahnungen 37 und 38 außer Eingriff bewegt und die Kupplung 30 befindet sich in einem geöffneten Zustand. Die Kupplung 30 überträgt dann kein Drehmoment mehr. In der Fig. 4 ist der geschlossene Zustand der Kupplung 30 dargestellt. Um die Schaltbarkeit unter Last weiter zu verbessern, ist die Ausgestaltung der axial verschiebbaren Kupplungskörper von großer Bedeutung. Die Ebene X verläuft in der Fig. 4 mittig durch die stirnseitigen Planverzahnungen 37, 38. Anhand eines Schnittes durch die Ebene ist weiter unten eine vorteilhafte Ausgestaltung der stirnseitigen Planverzahnung näher erläutert.

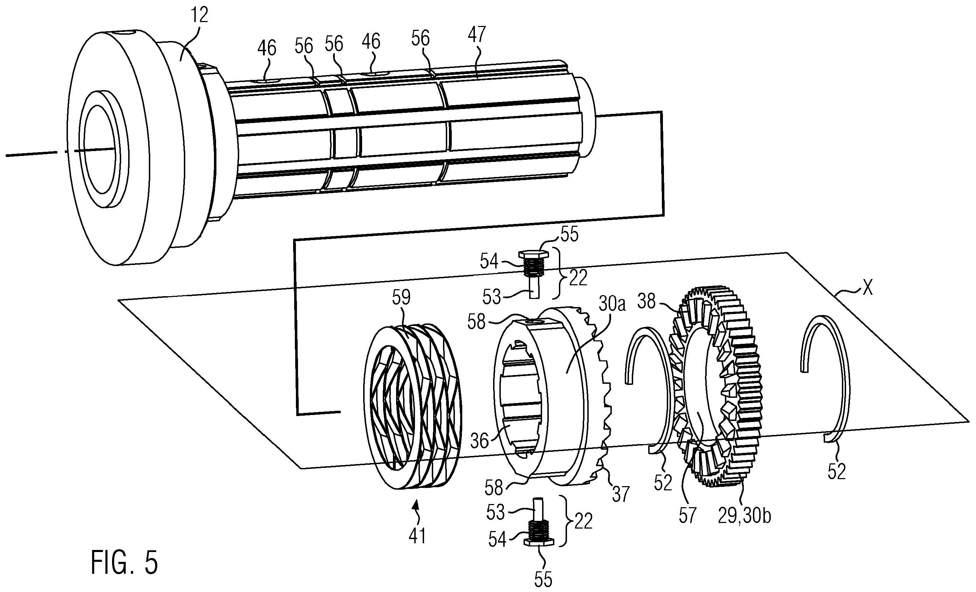

Fig. 5 zeigt die Bauteile der Fig. 4 in einer Explosionsdarstellung. Die Getriebehauptachse 12 besitzt die Außenverzahnung 47 und die Öffnungen 46. Die Außenverzahnung 47 kann aus nur wenigen, beispielsweise zwei bis zehn, insbesondere zwei bis fünf, in axialer Richtung verlaufenden Nuten bestehen. Die Innenverzahnung 36 ist komplementär zur Außenverzahnung 47. Des Weiteren kann die Getriebehauptachse 12 auf der Außenfläche in Umfangsrichtung verlaufende Nuten 56 für die Montage von Federringen 52 aufweisen.

Das Sonnenrad 29 besitzt eine Gleitlagerfläche 57 und kann auf der Getriebehauptachse 12 rotieren, jedoch aufgrund der axialen Festlegung durch beispielsweise die Federringe 52 nicht axial wandern. Selbstverständlich kann anstelle eines Gleitlagers für das Sonnenrad auch ein Wälzlager vorgesehen sein. Auf einer Stirnfläche des Sonnenrades 29 befindet sich die stirnseitige Planverzahnung 38. Sie kann insbesondere eingefräst oder eingedrückt sein. Das Kupplungselement 30a besitzt eine Innenverzahnung 36, die leicht verschiebbar als Steckverzahnung auf die Außenverzahnung 47 der Getriebehauptachse 12 passt. Die stirnseitige Planverzahnung 37 des Kupplungselements 30a kann im eingekuppelten Zustand ein Drehmoment formschlüssig auf das Sonnenrad 29 übertragen.

Stirnseitige Planverzahnungen in Kupplungen nach dem Stand der Technik werden meist über eine einzige Schraubendruckfeder im eingekuppelten Zustand gehalten. Eine einzelne Schraubendruckfeder ist jedoch nicht in der Lage, im eingekuppelten Zustand die Flächenpressung an allen Zähnen der stirnseitigen Planverzahnung 37 und 38 konstant zu halten. Anstelle einer Schraubendruckfeder ist daher eine Wellenfeder 41 bevorzugt. Über eine Wellenfeder 41 mit insbesondere mehr als zwei parallel geschalteten Einzelfedern kann die Flächenpressung an allen Zähnen der stirnseitige Planverzahnung 37 und 38 im eingekuppelten Zustand gegenüber dem Stand der Technik konstant und ein Durchrutschen des Getriebes verhindert werden. Ein Durchrutschen zwischen zwei Gängen ist in jedem Fall zu verhindern, da sich der Benutzer eines Fahrrades in dieser Situation verletzen kann. Eine Wellenfeder 41 ist, allgemein ausgedrückt, ein Federpaket aus mehreren parallel geschalteten Blattfedern, die über den Umfang verteilt sind.

Fig. 6 zeigt den beispielhaften Aufbau der Fig. 4 und Fig. 5 als Draufsicht von oben auf die Ebene X. Das Sonnenrad 29 ist auf der Getriebehauptachse 12 drehbar gelagert und axial durch die Federringe 52 gegen Verschieben gesichert. Die Kupplung 30 wird von der Feder 41 axial im geschlossenen Zustand gehalten. Wie im Detail A zu erkennen ist, steht die stirnseitige Planverzahnung 37 am verschieblichen Kupplungsbauteil 30 über die Zahnflanken 39 mit der stirnseitige Planverzahnung 38 am Sonnenrad 38 drehmomentübertragend im Eingriff. Die Zahnflanken 39 der Planverzahnungen 37, 38 berühren sich bei geschlossener Kupplung während der Drehmomentübertragung und berühren sich nicht bei geöffneter Kupplung.

In vorteilhafter Ausgestaltung sind die Zahnflanken im Mittel um einen Zahnkontaktwinkel α zwischen einschließlich 91 und einschließlich 97 Grad gekippt zu einer stirnseitigen Planfläche 60 angeordnet, von der sich die Verzahnung 61 in axialer Richtung jeweils weg erstreckt. Die Planfläche 60 verläuft senkrecht zur Rotationsachse 35 (Fig. 3). Ein Zahnkontaktwinkel α im Bereich von einschließlich etwa 91 Grad bis einschließlich etwa 97 Grad, insbesondere zwischen 93 Grad und 96 Grad, verringert die zum Ausrücken der Kupplung benötigte Kraft. Ein selbsttätiges Ausrücken ist aufgrund der Geometrie und der Feder 41 bei einem solchen Zahnkontaktwinkel nicht möglich. Innerhalb von Konstruktionen nach dem Stand der Technik ist dieser Winkel üblicherweise 90 Grad oder kleiner als 90 Grad, um die Kupplung in Selbsthemmung zu halten.

Allgemein kann man die beiden Kupplungselemente 30a, 30b bzw. 31a, 31b, die eine stirnseitige Planverzahnung 37, 38 besitzen, auch als Kupplungsscheiben oder Zahnscheiben 62 bezeichnen. Die Kupplungsscheiben 62 sind in der dargestellten Ausgestaltung als modifizierte Stirnzahnkupplung mit Freilauffunktion ausgelegt. In vorteilhafter Ausgestaltung soll ein Drehmoment also nur in eine Richtung übertragen werden. Die Kupplungsscheiben 62 sind sinnvollerweise aus gehärtetem Stahl hergestellt. Der Durchmesser, die Anzahl und Größe der Zähne sowie die Einbausituation sind in den Fig. 2 bis 6 nur beispielhaft angegeben.

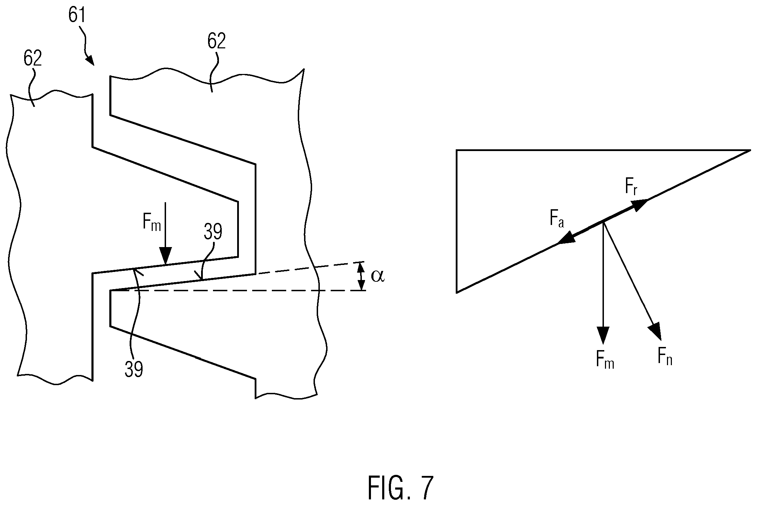

Fig. 7 zeigt eine vereinfachte Darstellung der Geometrie der Zahnscheiben 62. Fm stellt dabei die durch das Drehmoment erzeugte Anpresskraft, Fr die daraus resultierende Haftreibung und α (alpha) den Zahnkontaktwinkel dar. Fn ist die Normalkraft, welche auf die Druckflächen 39 wirkt. Der optimale Zahnkontaktwinkel α (alpha) hängt von der Haftreibungszahl µ₀ der Reibpaarung ab. Die Grenzbedingung für Selbsthemmung ist dann erfüllt, wenn ein Kräftegleichgewicht zwischen der selbstausrückenden Kraft Fa und der Haftreibungskraft Fr herrscht. Die Haftreibungszahl µ₀ kann je nach Schmierung und Werkstoffauswahl in einem weiten Bereich zwischen 0,08 und 0,5 liegen. Beispielhaft berechnet sich der Grenzwinkel für die Selbsthemmung zwischen Körpern aus gehärtetem Stahl bei Schmierung mit einer Haftreibung µ₀ = 0,08 zu etwa 5 Grad. In Fig. 6 entspricht das einem Winkel von etwa 95 Grad. Die Federkräfte der Wellenfeder 41 sind in dieser Berechnung nicht berücksichtigt und sorgen, da ein gleichmäßiger Druck auf die Zahnscheiben 62 ausgeübt wird, für eine sichere Übertragung der Drehmomente ohne Selbstausrücken bzw. Durchrutschen der Kupplung.

Die Verzahnung kann zur Verringerung der Reibung eine Oberfläche mit einem Gleitwerkstoff versehen sein oder aus einem Gleitwerkstoff aufweisen. Beispielsweise können wenigstens die ein Drehmoment übertragenden Zahnflanken 39, vorzugsweise jedoch die gesamte Verzahnung, mit einem Gleitlack beschichtet sein. Die Zahnscheiben 62 können auch aus einem Verbundwerkstoff mit einer Gleitwerkstoffkomponente hergestellt sein.

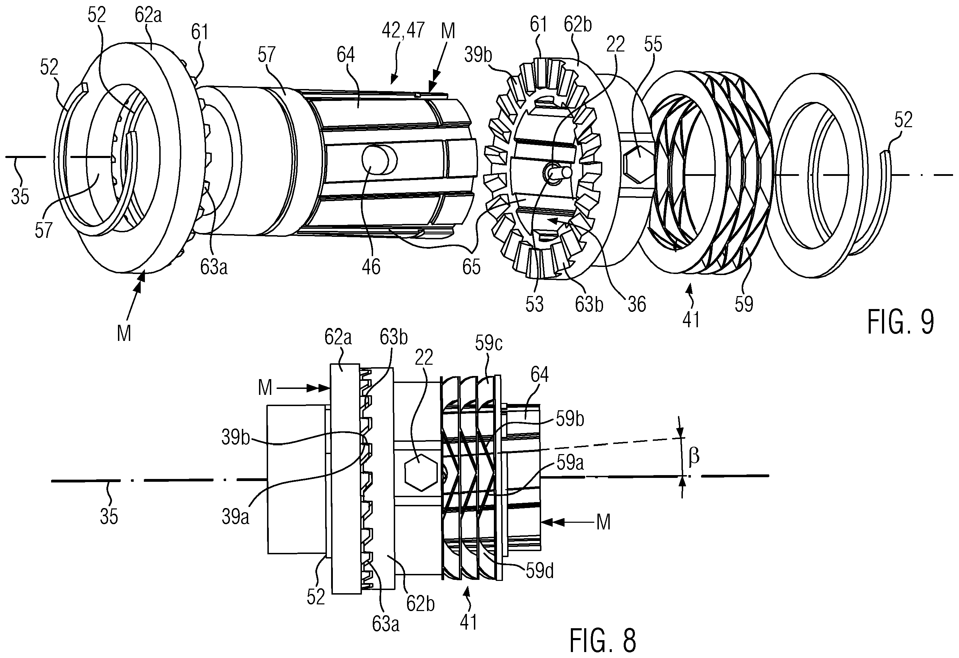

Die vorstehend geschilderte Kupplung kann losgelöst von einer Nabenschaltung allgemein als schaltbare Kupplung mit Freilauffunktion genutzt werden. Sie kann als eine vormontierte Baugruppe ausgestaltet sein, die als Ganzes auf der Getriebehauptachse 12 montiert wird. Dies ist nachstehend mit Bezug auf die Fig. 8 und 9 erläutert.

Die Verzahnung 61 kann immer dann eingesetzt werden, wenn zwischen zwei Körpern eine ein Drehmoment M in einer Richtung schaltbar übertragende Verbindung erreicht werden soll. Dabei ist es unerheblich, ob die zu kuppelnden Bauteile bei geschlossener Kupplung still stehen oder rotieren. Die zu kuppelnden Bauteile besitzen bevorzugt die gleiche Rotationsachse 35. Bei geschlossener Kupplung und Drehmomentübertragung stehen die Druckflächen 39a der einen Zahnscheibe 62a mit den Druckflächen 39b der gegenüberliegenden Zahnscheibe 62b im Eingriff. Die Verzahnung 61 der Zahnscheiben 62a, 62b besitzt von den Druckflächen 39a und 39b weg weisende Rückenflächen 63a und 63b, wobei in vorteilhafter Ausgestaltung bei geschlossener Kupplung und Drehmomentübertragung die Rückenfläche 63a der einen Zahnscheibe 62a nicht mit der Rückenfläche 63b der anderen Zahnscheibe 62b in Kontakt steht.

Werden beide Zahnscheiben 62a und 62b bei geschlossener Kupplung entgegen der Lastübertragungsrichtung gedreht, so dass die Rückenflächen 63a und 63b gegeneinander gedrückt werden, dann gleiten die Rückenflächen 63a und 63b aufeinander ab und es wird eine Freilauffunktion erreicht. Im geöffneten Zustand der Kupplung sind die Verzahnungen 61 beider Zahnscheiben 62 voneinander beabstandet.

Zum Schalten führt bevorzugt immer nur eine Zahnscheibe 62b eine axiale Bewegung entlang der Rotationsachse 35 aus. Diese Zahnscheibe 62b überträgt das Drehmoment meist über eine Steckverzahnung 65 beispielsweise der oben beschriebenen Außen- und Innenverzahnung 37, 47 an eine Kupplungswelle 64.

Die Fig. 8 und 9 zeigen beispielhaft die Kupplungswelle 64 mit einer Außenverzahnung 42, 47 und die Zahnscheibe 62b mit einer Innenverzahnung 36. Die Innenverzahnung 36 und die Außenverzahnung 42, 47 bilden zusammen eine verschiebliche Steckverzahnung 65. Das ist jedoch nur eine beispielhafte Ausgestaltung der Steckverzahnung 65. Es kann auch eine Zahnscheibe 62b eine Außenverzahnung besitzen und in einer hohlen Kupplungswelle mit Innenverzahnung gleiten. Beim Schalten unter Last muss auch die Haftreibung innerhalb der Steckverzahnung 65 überwunden werden. Das zu übertragende Drehmoment M erzeugt auf den Zahnflanken der Steckverzahnung 65 mit Schrägungswinkel β eine Normalkraft Fn (vgl. Fig. 6). Der Schrägungswinkel β wird in axialer Richtung zwischen einer die Rotationsachse 35 enthaltenden Ebene und den Zahnflanken der Steckverzahnung 65 gemessen. Durch die Schrägung besitzt diese Normalkraft Fn einen axialen Kraftanteil Fa, welcher der Reibkraft Fr entgegenwirkt. Der Schrägungswinkel β und die Haftreibungszahl µ₀ müssen innerhalb der Steckverzahnung so gewählt werden, dass bei Drehmomentübertragung die Kupplung gerade nicht selbsttätig öffnet. In vorteilhafter Ausgestaltung besitzt die Steckverzahnung 65 daher einen Schrägungswinkel β zwischen 1 und 7 Grad. Wie die Planverzahnung kann auch die Oberfläche der Steckverzahnung einen Gleitwerkstoff aufweisen. Alternativ kann die Planverzahnung auch einen Verbundwerkstoff mit einer Gleitwerkstoffkomponente enthalten.

Fig. 9 zeigt ebenfalls in beispielhafter Ausgestaltung die zwei als Langlöcher ausgestalteten Öffnungen 46 bzw. die Außen- und Innenverzahnung 36, 42, 47 der Kupplungswelle 64. Es muss jedoch nicht unbedingt ein Langloch 46 vorgesehen sein. Jede Art von Öffnung innerhalb der Kupplungswelle 64 ist möglich, sofern der Schaltfinger 22 in axialer Richtung ausreichend beweglich ist. Im zusammengebauten Zustand befindet sich die Mantelfläche 53 der Schaltfinger 22 innerhalb der Öffnungen 46. Da die Schaltfinger 22 fest in der axial beweglichen Zahnscheibe 62b eingeschraubt oder anderweitig befestigt sind, kann das hier nicht dargestellte Betätigungselement im Inneren der Kupplungswelle 64 die Zahnscheibe 62b spielfrei bewegen. Das ist ein Vorteil im Vergleich zum Stand der Technik.

Des Weiteren ist in Fig. 9 dargestellt, dass eine axial nicht bewegliche Zahnscheibe 62a auf einer Gleitlagerfläche 57 um die Rotationsachse 35 rotieren und axial durch beispielsweise zwei Federringe 52 unverschieblich festgelegt sein kann. Die Steckverzahnung 65 besitzt üblicherweise ein geringes Spiel in Umfangsrichtung, damit ein leichtes axiales Verschieben der Zahnscheibe 62b auf der Kupplungswelle 64 möglich ist. Um ein gleichmäßiges Einkoppeln der Druckflächen 39a zu den benachbarten Druckflächen 39b sicherzustellen, steht die axial bewegliche Zahnscheibe 62b in Verbindung mit einem Federelement 41 mit mindestens zwei parallel geschalteten Einzelfedern 59, beispielsweise einer Wellenfeder.

Die Wellenfeder der Fig. 8 und 9 ist ein Beispiel für ein Federelement 41, das stirnseitig über den Umfang eine gleichmäßige axiale Anpresskraft erzeugt. Man erkennt als Einzelfedern mehrere parallel geschaltete Blattfedern 59a, 59b, 59, 59d usw., die ein Element mit mehr als zwei parallel geschalteten Einzelfedern 59 bilden. Wellenfedern sind gewundene, federnde Bauteile, die aus Flachmaterial gefertigt werden. Es handelt sich bei der dargestellten Ausführung um eine mehrlagige Wellenfeder mit parallelen Enden. Eine Wellenfeder kann aus gewickeltem Flachdraht gefertigt sein, der durch eingearbeitete Wellen eine Federwirkung erhält. Wellenfedern sind Spiralfedern aufgrund der geringeren Bauhöhe und des gleichmäßigen Anpressdrucks bei gleicher Kraft in der beschriebenen Anwendung überlegen.

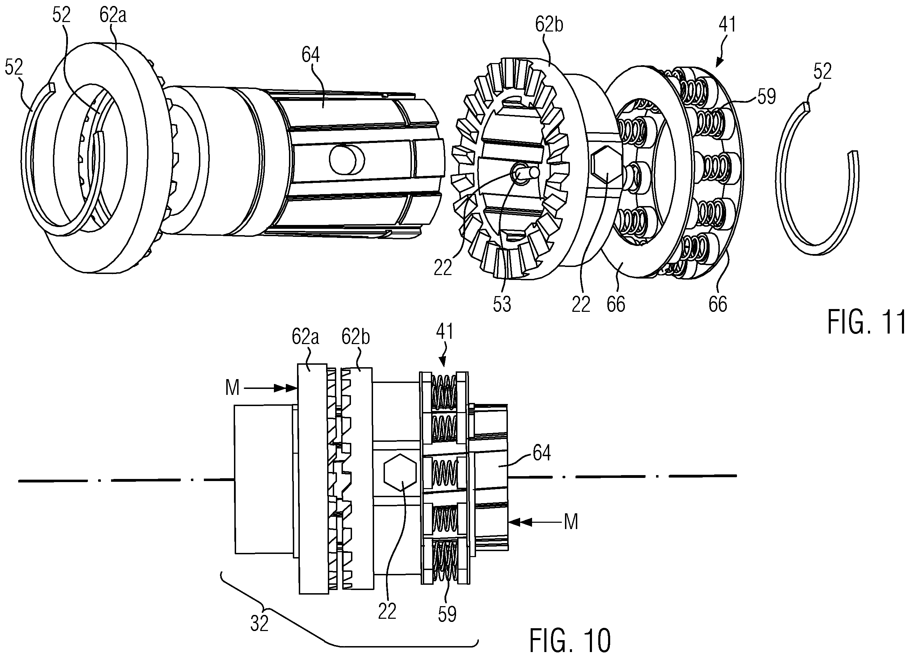

In Fig. 10 und 11 ist eine weitere Ausgestaltung der schaltbaren Freilaufkupplung dargestellt. Bei dieser Ausgestaltung ist anstatt der Wellenfeder eine Feder 41 mit einer Mehrzahl, beispielsweise zwölf, parallel geschalteten Einzelfedern 59a, 59b etc., beispielsweise Schraubenfedern, vorgesehen.

Die Einzelfedern sind zusammen bevorzugt an ihren beiden Enden mit jeweils einer ringförmigen Kunststoffscheibe 66 umspritzt, durch die sich die Kupplungswelle 64 erstreckt. Hierdurch entsteht ein integrales Federelement mit mehr als zwei parallel geschalteten Einzelfedern 59, welches mit der axial beweglichen Zahnscheibe 62b in Verbindung steht und diese vorteilhaft gleichmäßig gegen die axial feststehende Zahnscheibe 62a drückt.

In Fig. 10 ist die Kupplung 62 geöffnet, die mindestens zwei Schaltfinger 22 tauchen in die Schaltnut 45 des Betätigungselementes 13. Die Schaltnut 45 und das Betätigungselementes 13 sind in Fig. 10 nicht dargestellt. Das Drehmoment M wird in dieser Darstellung zwar von der Kupplungswelle 64 auf die axial bewegliche Zahnscheibe 62b übertragen, jedoch wird von dort kein Drehmoment auf die axial feststehende Zahnscheibe 62a übertragen.

### Bezugszeichen

- 1: Kettenstreben
- 2: Sitzstreben
- 3: Ausfallenden
- 4: hintere Riemenscheibe
- 5: Achsaufnahmen
- 6: Schaltungsanordnung, insbesondere Nabenschaltung
- 7: Steckachse
- 8: Bremsscheibe
- 9: Hülse
- 10: Aktuator
- 11: Schaltleitung
- 12: Getriebehauptachse
- 13: Schalttrommel, Betätigungselement
- 14: Betätigungszahnrad
- 15: Schaltgehäuse
- 16: Achsplatte
- 17: Aktuatorgehäuse
- 18: Deckel Aktuatorgehäuse
- 19: Getriebe
- 19a: Zahnrad am Betätigungselement
- 20: elektrischer Motor
- 21: Planflächen der Schalttrommel
- 22: Schaltfinger
- 22a: Führungsfinger
- 23: Führungsnut
- 23a: Seitenfläche der Führungsnut
- 24: Vertiefung als Rastpunkt
- 25: federbelastetes Druckstück
- 26: Antreiber
- 27: Planetenträger
- 28: Hohlrad
- 29: Sonnenrad
- 29a: Planetengetriebe
- 30: Kupplung
- 30a: axial verschiebliches Kupplungselement
- 30b: axial festes Kupplungselement
- 31: Kupplung
- 31a: axial verschiebliches Kupplungselement
- 31b: axial festes Kupplungselement
- 32: Kupplung; Kupplungsbaugruppe
- 33: Kugellager
- 34: Steckachsmutter
- 35: Rotationsachse
- 36: Innenverzahnung
- 37: stirnseitige Planverzahnung am verschieblichen Kupplungsbauteil
- 38: stirnseitige Planverzahnung am festen Kupplungselement
- 39: Zahnflanke bzw. Druckfläche
- 39a: Druckflächen an axial feststehender Zahnscheibe
- 39b: Druckflächen an axial beweglicher Zahnscheibe
- 40: Planverzahnung am Planetenträger
- 41: Feder
- 42: Außenverzahnung am Antreiber
- 43: Schiebering
- 44: Kugellager
- 45: Schaltnut
- 45a: Kulissensteuerung
- 46: Öffnung
- 47: Außenverzahnung der Getriebehauptachse
- 48: Spalt
- 49a - 49e: erste bis vierte Zahnradgetriebestufe des Getriebes 19
- 50: Elektronikplatine
- 51: Sensor
- 52: Federringe
- 53: Mantelfläche
- 54: Gewinde
- 55: Kopf
- 56: Nut für Federringe
- 57: Gleitlagerfläche
- 58: Innengewinde
- 59: Federelement mit mehr als zwei parallel geschalteten Einzelfedern
- 59a - 59d: Einzelfedern
- 60: Planfläche
- 61: Zahnförmige Erhebung
- 62: Zahnscheiben; Kupplungsscheiben
- 62a: axial nicht bewegliche Zahnscheibe
- 62b: axial bewegliche Zahnscheibe
- 63: Rückenfläche
- 63a: Rückenflächen der axial nicht beweglichen Zahnscheibe
- 63b: Rückenflächen der axial beweglichen Zahnscheibe
- 64: Kupplungswelle
- 65: Steckverzahnung
- 66: Kunststoffscheibe
- Fa: selbstausrückende Kraft
- Fm: Anpresskraft
- Fn: Normalkraft
- Fr: Haftreibungskraft
- M: Drehmoment
- µ₀: Haftreibungszahl
- α: Zahnkontaktwinkel; Öffnungswinkel der Planverzahnung
- β: Schrägungswinkel der Steckverzahnung

## Patentansprüche

1. Schaltungsanordnung (6) für ein Fahrrad, insbesondere für eine Nabenschaltung,
- mit einer drehfest gegenüber einem Fahrradrahmen (1, 2) festlegbaren, hohlen Getriebehauptachse (12),
- mit einem drehbar auf der Getriebehauptachse gelagerten Antreiber (26),
- mit wenigstens einem Planetengetriebe (29a), das wenigstens eine auf der Getriebehauptachse drehbar gelagerte Getriebekomponente (27, 29) in Form eines Planetenträgers (27) oder eines Sonnenrades (29) aufweist,
- mit einer Kupplung (30, 31), die ein gegenüber der Getriebehauptachse zwischen einem eingekuppelten Schaltzustand und einem ausgekuppelten Schaltzustand axial verschiebliches Kupplungselement (30a, 31a) aufweist, wobei die Getriebekomponente im eingekuppelten Schaltzustand der Kupplung mit der Getriebehauptachse drehfest und im ausgekuppelten Schaltzustand der Kupplung gegenüber der Getriebehauptachse frei drehbar verbunden ist,
- mit einem in der Getriebehauptachse aufgenommenen, gegenüber der Getriebehauptachse drehbaren Betätigungselement (13),
- mit wenigstens einer Kulissensteuerung (45a), die das Betätigungselement mit dem axial verschieblichen Kupplungselement verbindet und ausgestaltet ist, eine Drehbewegung des Betätigungselements in eine axiale Verschiebung des axial verschieblichen Kupplungselements umzusetzen,
- mit einer gehäuseförmigen Hülse (9), in der die Getriebehauptachse (12) und das wenigstens eine Planetengetriebe (29a) aufgenommen sind,
- mit einem Aktuator (10) zum Drehen des Betätigungselements (13), wobei sich der Aktuator (10) außerhalb der Hülse (9) befindet und einen Elektromotor (20) aufweist,
wobei die Kulissensteuerung wenigstens zwei von einer Kulissenführung (45) der Kulissensteuerung bewegte und in Drehrichtung des Betätigungselements voneinander beabstandete Schaltfinger (22) aufweist, die sich vom axial beweglichen Kupplungselement durch eine Öffnung (46) der Getriebehauptachse in die Kulissenführung erstrecken,
und wobei die Kupplung (30, 31) eine axial wirkende Feder (41) aufweist, die auf das axial verschiebliche Kupplungselement (30a, 31a) einwirkt und das axial verschiebliche Kupplungselement zum axial feststehenden Kupplungselement (30b, 31b) der Kupplung bewegt.

2. Schaltungsanordnung (6) nach Anspruch 1, wobei die Feder (41) wenigstens zwei parallel geschaltete Einzelfedern (59a, 59b, 59c, 59d) aufweist.

3. Schaltungsanordnung (6) nach einem der Ansprüche 1 bis 2, wobei die Kupplung (30, 31) mit stirnseitigen Planverzahnungen (37, 38) versehen ist und wobei die Planverzahnungen sich im eingekuppelten Schaltzustand in wenigstens einer Richtung ein Drehmoment übertragend im Eingriff und im ausgekuppelten Schaltzustand außer Eingriff befinden.

4. Schaltungsanordnung (6) nach Anspruch 3, wobei ein Öffnungswinkel der das Drehmoment übertragenden Zahnflanken (39) der Planverzahnungen (37, 38) wenigstens 91 Grad und höchstens 97 Grad beträgt.

5. Schaltungsanordnung nach Anspruch 3 oder 4, wobei zumindest die das Drehmoment übertragenden Zahnflanken (39) eine von einem Gleitwerkstoff gebildete Oberfläche aufweisen.

6. Schaltungsanordnung (6) nach einem der Ansprüche 1 bis 5, mit einer elektronischen Steuereinheit (50), wobei die Steuereinheit (50) ausgestaltet ist, den Elektromotor (20) abhängig von einem elektrischen Schaltbefehl zu betätigen.

7. Schaltungsanordnung (6) nach einem der Ansprüche 1 bis 6, wobei die Einzelfedern (59a, 59b, 59c, 59d) in Umfangsrichtung um die Rotationsachse (35) gleichmäßig verteilt sind.

8. Schaltungsanordnung (6) nach einem der Ansprüche 1 bis 7, wobei die Feder (41) eine Wellenfeder ist.

9. Schaltungsanordnung (6) nach einem der Ansprüche 1 bis 8, wobei die Feder (41) eine Mehrzahl von Federpaketen aufweist und ein Federpaket eine Mehrzahl von Einzelfedern (59a, 59b, 59c, 59d) aufweist.

10. Schaltungsanordnung (6) nach einem der Ansprüche 1 bis 9, wobei die Einzelfedern (59a, 59b, 59c, 59d) Blattfedern sind.

11. Fahrrad, insbesondere Elektrofahrrad mit einer als Nabenschaltung ausgebildeten Schaltungsanordnung (6) nach einem der Ansprüche 1 bis 10.

12. Fahrrad nach Anspruch 11, wobei die Schaltungsanordnung (6) eine Aktuator (10) zum Drehen des Betätigungselements (13) aufweist und der Aktuator (10) in einem Aktuatorgehäuse (17) angeordnet ist, das sich in Fahrtrichtung des Fahrrades vor der Getriebehauptachse (12) und unterhalb einer Kettenstrebe (1) befindet.

13. Fahrrad nach Anspruch 11 oder 12, wobei das Fahrrad einen Hilfsmotor und eine Motorsteuerung zur Einstellung der Leistung des Hilfsmotors aufweist und wobei die Motorsteuerung ausgestaltet ist, die Leistung des Hilfsmotors abhängig von einem Schaltvorgang der Schaltanordnung (6) zu steuern.

## Claims

1. Gearshift assembly (6) for a bicycle, in particular for a hub gear, comprising
- a hollow main gear shaft (12) fixable in a rotationally rigid manner relative to a bicycle frame (1, 2),
- a driver (26) mounted rotatably on the main gear shaft,
- at least one planetary gear (29a) having at least one gear component (27, 29) rotatably mounted on the main gear shaft in the form of a planet carrier (27) or a sun gear (29),
- a clutch (30, 31) including a clutch element (30a, 31a) that is axially displaceable relative to the main gear shaft between an engaged and a disengaged state, wherein the clutch component is connected to the main gear shaft in a rotationally fixed manner in the engaged state of the clutch and is connected so as to be freely rotatable relative to the main gear shaft in the disengaged state of the clutch,
- an actuating element (13) mounted in the main gear shaft and rotatable relative to the main gear shaft,
- at least one cam control (45a) that connects the actuating element to the axially movable clutch element and is configured to convert a rotational movement of the actuating element into an axial displacement of the axially movable clutch element,
- a housing-shaped sleeve (9), in which the main gear shaft(12) and the at least one planetary gear (29a) are housed,
- an actuator (10) for rotating the actuating element (13), wherein the actuator (10) is located outside the sleeve (9) and comprises an electric motor (20),
wherein the cam control comprises at least two shift fingers (22) moved by a cam guide (45) of the cam control and spaced apart from one another in the direction of rotation of the actuating element, which extend from the axially movable clutch element through an opening (46) in the main gear shaft into the cam guide,
and wherein the clutch (30, 31) comprises an axially acting spring (41) that acts on the axially displaceable clutch element (30a, 31a) and moves the axially displaceable clutch element toward the axially fixed clutch element (30b, 31b) of the clutch.

2. Gearshift assembly (6) according to claim 1, wherein the spring (41) comprises at least two individual springs (59a, 59b, 59c, 59d) connected in parallel.

3. Gearshift assembly (6) according to any one of claims 1 to 2, wherein the clutch (30, 31) is provided with frontal crown-wheel gearings (37, 38) on its end faces, and wherein the frontal crown-wheel gearings are in engagement in the engaged shifting state, transmitting torque in at least one direction, and are out of engagement in the disengaged shifting state.

4. Gearshift assembly (6) according to claim 3, wherein the opening angle of the torque-transmitting tooth flanks (39) of the crown-wheel gearings (37, 38) is at least 91 degrees and at most 97 degrees.

5. Gearshift assembly according to claim 3 or 4, wherein at least the torque-transmitting tooth flanks (39) have a surface formed from a sliding material.

6. Gearshift assembly (6) according to any one of claims 1 to 5, comprising an electronic control unit (50), wherein the control unit (50) is configured to actuate the electric motor (20) in response to an electrical control signal.

7. Gearshift assembly (6) according to any one of claims 1 to 6, wherein the individual springs (59a, 59b, 59c, 59d) are evenly distributed in the circumferential direction around the axis of rotation (35).

8. Gearshift assembly (6) according to any one of claims 1 to 7, wherein the spring (41) is a torsion spring.

9. Gearshift assembly (6) according to any one of claims 1 to 8, wherein the spring (41) comprises a plurality of spring assemblies, and a spring assembly comprises a plurality of individual springs (59a, 59b, 59c, 59d).

10. Gearshift assembly (6) according to any one of claims 1 to 9, wherein the individual springs (59a, 59b, 59c, 59d) are leaf springs.

11. Bicycle, in particular an electric bicycle, comprising a gearshift assembly (6) configured as a hub gear according to any one of claims 1 to 10.

12. Bicycle according to claim 11, wherein the gearshift assembly (6) comprises an actuator (10) for rotating the actuating element (13), and the actuator (10) is arranged in an actuator housing (17) that is located in the direction of travel of the bicycle in front of the main gear shaft (12) and below a chain stay (1).

13. Bicycle according to claim 11 or 12, wherein the bicycle comprises an auxiliary motor and a motor controller for adjusting the power of the auxiliary motor, and wherein the motor controller is configured to control the power of the auxiliary motor depending on a shifting operation of the gearshift assembly (6).

## Revendications

1. Agencement de commutation (6) pour une bicyclette, en particulier pour un moyeu à vitesses intégrées, comportant
- un axe de transmission principal creux (12) qui peut être monté de manière fixe en rotation par rapport à un cadre de bicyclette (1, 2),
- un entraînement (26) monté de manière rotative sur l'axe de transmission principal,
- au moins un train d'engrenages planétaires (29a) comprenant au moins un composant de transmission (27, 29) monté de manière rotative sur l'axe de transmission principal sous la forme d'un porte-satellites (27) ou d'un engrenage solaire (29),
- un accouplement (30, 31) qui comporte un élément d'accouplement (30a, 31a) déplaçable axialement par rapport à l'axe de transmission principal entre un état de commutation accouplé et un état de commutation désaccouplé, dans lequel le composant de transmission est fixé en rotation à l'axe de transmission principal dans l'état de commutation accouplé de l'accouplement, et en rotation libre par rapport à l'axe de transmission principal dans l'état de commutation désaccouplé de l'accouplement,
- un élément d'actionnement (13) monté dans l'axe principal de la transmission et rotatif par rapport à l'axe de transmission principal,
- au moins une commande à coulisse (45a) qui relie l'élément d'actionnement à l'élément d'accouplement déplaçable axialement, et conçue pour convertir un mouvement rotatif de l'élément d'actionnement en un déplacement axial de l'élément d'accouplement déplaçable axialement,
- un manchon en forme de boîtier (9) où sont logés l'axe de transmission principal (12) et ledit au moins un train d'engrenages planétaires (29a),
- un actionneur (10) pour faire tourner l'élément d'actionnement (13), dans lequel l'actionneur (10) est situé à l'extérieur du manchon (9) et comporte un moteur électrique (20),
dans lequel la commande à coulisse comporte au moins deux doigts de commutation (22) déplacés par un guide de coulisse (45) de la commande à coulisse et espacés l'un de l'autre dans la direction de rotation de l'élément d'actionnement, qui s'étendent depuis l'élément d'accouplement mobile axialement à travers une ouverture (46) de l'axe de transmission principal dans le guide de coulisse, et
dans lequel l'accouplement (30, 31) comporte un ressort à action axiale (41) qui agit sur l'élément d'accouplement déplaçable axialement (30a, 31a) et déplace l'élément d'accouplement déplaçable axialement vers l'élément d'accouplement fixe axialement (30b, 31b) de l'accouplement.

2. Agencement de commutation (6) selon la revendication 1, dans lequel le ressort (41) comporte au moins deux ressorts individuels (59a, 59b, 59c, 59d) connectés en parallèle.

3. Agencement de commutation (6) selon l'une des revendications 1 et 2, dans lequel l'accouplement (30, 31) est pourvu de dents planes (37, 38) côté face, et dans lequel les dents planes sont accouplées dans au moins une direction transmettant un couple dans l'état de commutation accouplé et sont désaccouplées dans l'état de commutation désaccouplé.

4. Agencement de commutation (6) selon la revendication 3, dans lequel un angle d'ouverture des flancs de dents transmettant le couple (39) des dents planes (37, 38) est d'au moins 91 degrés et d'au plus 97 degrés.

5. Agencement de commutation selon la revendication 3 ou 4, dans lequel au moins les flancs de dents transmettant le couple (39) ont une surface constituée par un matériau de glissement.

6. Agencement de commutation (6) selon l'une des revendications 1 à 5 comportant une unité de commande électronique (50), dans lequel l'unité de commande (50) est configurée pour actionner le moteur électrique (20) en fonction d'une commande de commutation électrique.

7. Agencement de commutation (6) selon l'une des revendications 1 à 6, dans lequel les ressorts individuels (59a, 59b, 59c, 59d) sont uniformément répartis en direction circonférentielle autour de l'axe de rotation (35).

8. Agencement de commutation (6) selon l'une des revendications 1 à 7, dans lequel le ressort (41) est un ressort ondulé.

9. Agencement de commutation (6) selon l'une des revendications 1 à 8, dans lequel le ressort (41) comporte une pluralité de groupes de ressorts et un groupe de ressorts comporte une pluralité de ressorts individuels (59a, 59b, 59c, 59d).

10. Agencement de commutation (6) selon l'une des revendications 1 à 9, dans lequel les ressorts individuels (59a, 59b, 59c, 59d) sont des ressorts à lames.

11. Bicyclette, en particulier bicyclette électrique, comportant un agencement de commutation (6) conçu comme un moyeu à vitesses intégrées selon l'une des revendications 1 à 10.

12. Bicyclette selon la revendication 11, dans laquelle l'agencement de commutation (6) comporte un actionneur (10) pour faire tourner l'élément d'actionnement (13), et l'actionneur (10) est agencé dans un boîtier d'actionneur (17) qui est situé dans la direction de déplacement de la bicyclette devant l'axe de transmission principal (12) et sous une base de cadre (1).

13. Bicyclette selon la revendication 11 ou 12, dans laquelle la bicyclette comporte un moteur auxiliaire et une commande de moteur pour régler la puissance du moteur auxiliaire, et dans laquelle la commande de moteur est conçue pour contrôler la puissance du moteur auxiliaire en fonction d'une opération de commutation de l'agencement de commutation (6).
